(19) Europäisches Patentamt
European Patent Office
Office européen des brevets

(11) **EP 1 495 614 B1**

(12) **EUROPEAN PATENT SPECIFICATION**

(45) Date of publication and mention
of the grant of the patent:
**16.07.2014 Bulletin 2014/29**

(51) Int Cl.:
***H04L 29/06*** *(2006.01)*

(21) Application number: **03717632.8**

(22) Date of filing: **17.04.2003**

(86) International application number:
**PCT/JP2003/004898**

(87) International publication number:
**WO 2003/088615 (23.10.2003 Gazette 2003/43)**

(54) **MOBILE NODE, ROUTER, SERVER AND METHOD FOR MOBILE COMMUNICATIONS UNDER IP VERSION 6 (IPV6) PROTOCOL**

MOBILER NETZKNOTEN, ROUTER, SERVER UND VERFAHREN ZUR MOBILKOMMUNIKATION UNTER DEM IP VERSION 6 (IPV6) PROTOKOLL

NOEUD MOBILE ET PROCEDE POUR COMMUNICATIONS MOBILES

(84) Designated Contracting States:
**DE FR GB**

(30) Priority: **18.04.2002 JP 2002115861**
**14.04.2003 JP 2003108846**

(43) Date of publication of application:
**12.01.2005 Bulletin 2005/02**

(73) Proprietor: **Panasonic Corporation**
**Kadoma-shi**
**Osaka 571-8501 (JP)**

(72) Inventors:
• **FUNABIKI, Makoto**
**Yokohama-shi, Kanagawa 230-0001 (JP)**
• **IKEDA, Shinkichi**
**Yokohama-shi, Kanagawa 224-0061 (JP)**
• **MATSUMOTO, Taisuke**
**Yokohama-shi, Kanagawa 220-0004 (JP)**
• **KIMURA, Yasunari**
**Yokohama-shi, Kanagawa 227-0051 (JP)**
• **KOBAYASHI, Hirokazu**
**Kawasaki-shi, Kanagawa 215-0025 (JP)**

(74) Representative: **Balsters, Robert et al**
**Novagraaf International S.A.**
**Chemin de l'Echo 3**
**1213 Onex (CH)**

(56) References cited:
**EP-A- 1 134 991 WO-A-98/57275**

• **BHATTACHARJEE S ET AL: "Application-layer anycasting" INFOCOM '97. SIXTEENTH ANNUAL JOINT CONFERENCE OF THE IEEE COMPUTER AND COMMUNICATIONS SOCIETIES. DRIVING THE INFORMATION REVOLUTION., PROCEEDINGS IEEE KOBE, JAPAN 7-11 APRIL 1997, LOS ALAMITOS, CA, USA,IEEE COMPUT. SOC, US, 7 April 1997 (1997-04-07), pages 1388-1396, XP010251961 ISBN: 0-8186-7780-5**
• **HEISSENHUBER F ET AL: "HOME AGENT REDUNDANCY AND LOAD BALANCING IN MOBILE IPV6" BROADBAND COMMUNICATIONS. PROCEEDINGS OF THE INTERNATIONAL IFIP-IEEE CONFERENCE ON BROADBAND COMMUNICATIONS, XX, XX, 10 November 1999 (1999-11-10), pages 235-244, XP009002035**
• **PARK V D ET AL: "Anycast routing for mobile networking" MILITARY COMMUNICATIONS CONFERENCE PROCEEDINGS, 1999. MILCOM 1999. IEEE ATLANTIC CITY, NJ, USA 31 OCT.-3 NOV. 1999, PISCATAWAY, NJ, USA,IEEE, US, 31 October 1999 (1999-10-31), pages 1-5, XP010369528 ISBN: 0-7803-5538-5**
• **D. JOHNSON, S. DEERING: "Reserved IPv6 Subnet Anycast Addresses (RFC 2526)" IETF NETWORK WORKING GROUP (RFC 2526), [Online] March 1999 (1999-03), pages 1-7, XP002257008 Retrieved from the Internet: <URL: http://rfc-editor.org> [retrieved on 2003-09-30]**

EP 1 495 614 B1

• PERKINS C E ET AL: "MOBILITY SUPPORT IN IPV6" MOBICOM. PROCEEDINGS OF THE ANNUAL INTERNATIONAL CONFERENCE ON MOBILE COMPUTING AND NETWORKING, XX, XX, November 1996 (1996-11), pages 1-11, XP002901803

# EP 1 495 614 B1

**Description**

TECHNICAL FIELD

This invention relates to a method and apparatus for mobile communications supported with IP version 6 (hereinafter referred to as "IPv6") in order for communications with another communication node through the use of the same address while the mobile node is connected with the other than the home link.

BACKGROUND ART

Conventionally, there are such mobile communication methods including a description in JP-A-2001-237764, for example.

Fig. 33 shows a conventional mobile communication method described in JP-A-2001-237764.

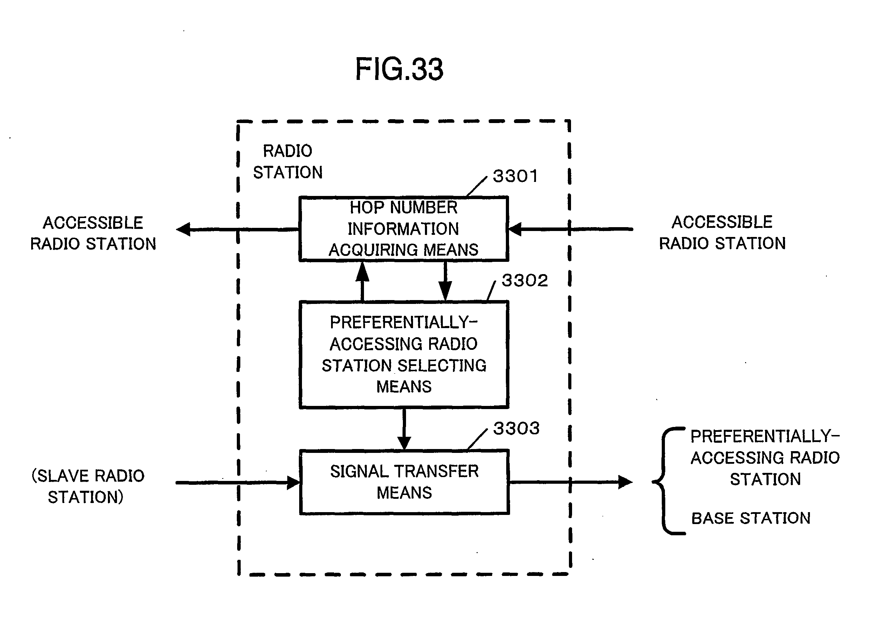

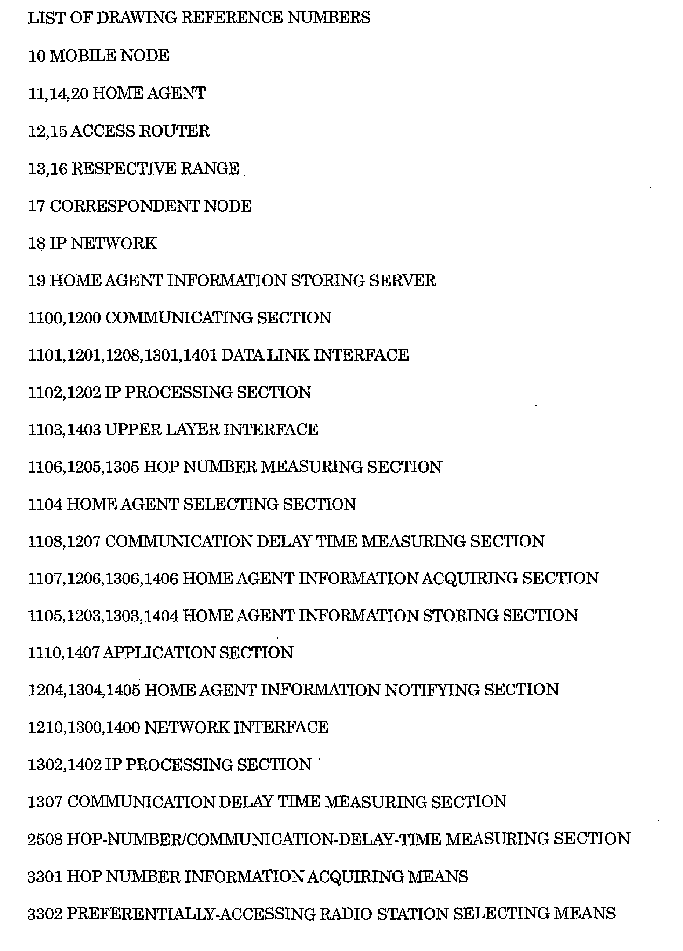

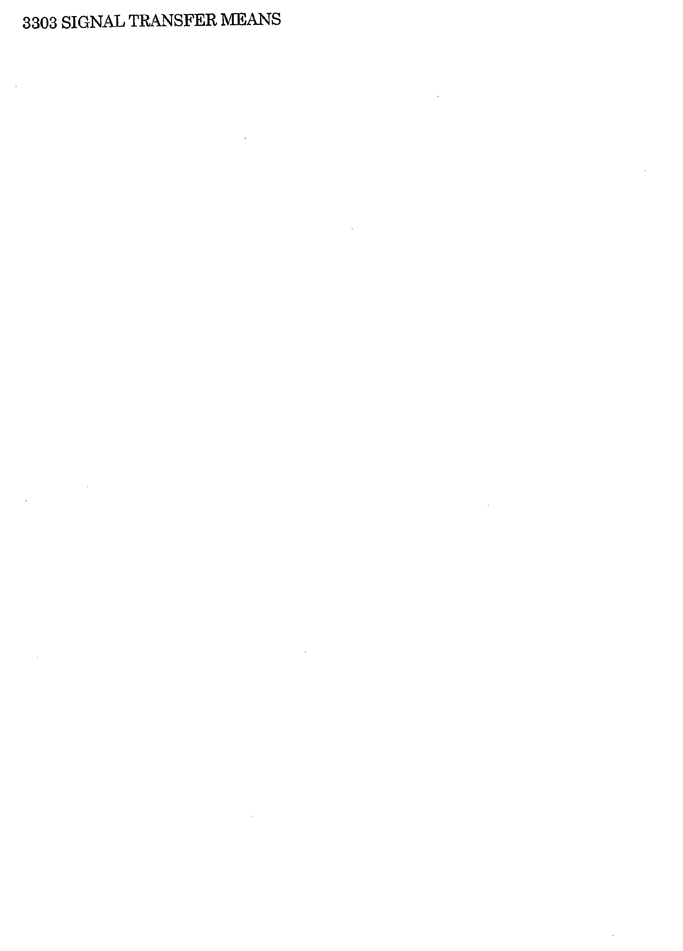

In Fig. 33, a radio station comprises hop-number information acquiring means 3301 for acquiring hop-number information from an accessible radio station, preferentially-accessing radio station selecting means 3302 for selecting preferentially-accessing radio stations, or relay points, out of accessible radio stations according to the hop-number information, and signal transfer means 3303 for transferring a transmission signal or a signal received from a slave radio station to a preferentially-accessing radio station or base station.

In the conventional configuration, however, when the radio station, or mobile node, is distant far from a home agent, a shortest path is selected out of the paths for exchange of packets between the mobile node and the home agent. The distance to the home agent becomes long too in order for a home agent's position not to change. Therefore, there is a drawback that the load over the network is increased by the control packets, such as binding update messages, to be sent by the mobile node to the home agent in order to register primary care-of addresses. Because the packets will pass a long-distance course. Meanwhile, where the distance increases between the home agent and the mobile node, it takes a long time in registering the care-of address. This results in a problem of packet loss and delay increase.

Furthermore, where the resource is deficient for the home agent or the mobile node moves out of the range under control of the home agent, there is a problem that it is impossible to swiftly change the home agent of each node.

Reference may be made to EP-A-1134991 which discloses the precharacterizing features of the present invention. Reference may also be made to S. Bhattacharjee et al., "Application-Layer Anycasting", Infocom '97, 16th Annual Joint Conference of the IEEE Computer and Communications Soc., Kobe, Japan 7-11 April 1997, IEEE Computer Soc. US, 7 April 1997, pp. 1388-1396. Reference may also be made to C. Perkins et al. "Mobility Support in IPV6", Mobicom. Proceedings of the Annual International Conference on Mobile Computing and Networking, Nov. 1996, pp 1-11.

DISCLOSURE OF THE INVENTION

The present invention is defined in the claims.

An advantage of the invention is that it can provide a method and apparatus for mobile communications which reduces the loss and delay of control packets, upon handover, between the mobile node and the home agent and relieves the load on the home agent.

A method of mobile communications of a preferred embodiment, for solving the above-described problem, is that, in a mobile communication system supporting IPv6, the mobile node can change the current home agent with a home agent existing closer when the mobile node and the home agent are far in distance.

This reduces the load on the network for control packet transfer and shortens the time required in registering care-of addresses, thereby reducing the loss and delay of packets. Also, change of the home agent because of the reason of resource deficiency or control range of the home agent can be swiftly performed.

A mobile node according to an embodiment of the invention comprises: a measuring section for measuring at least any one of a hop number and communication delay time to a home agent; a home agent information acquiring section for acquiring information about a home agent as a subject of measurement of the measuring section; and a home agent selecting section for changing, when a measurement value to the home agent to which the mobile node belongs becomes equal to or greater than a first predetermined value, the belonging home agent into the new home agent by using the information which acquired in the acquiring section, having a measurement value equal to or less than a second predetermined value.

Due to this, a change is performed to a home agent smaller in hop number or communication delay time, to shorten the path for control packet transfer. This can decrease the load over the entire network.

Also, a measuring section of the invention, in a case that the mobile node is in real-time communication with another node, measures a communication delay time to the home agent to change, the belonging home agent by one having a communication delay equal to or smaller than a fourth predetermined value when a communication delay to the belonging home agent becomes equal to or greater than a third predetermined value; and in the case of not so, the measuring section measures a hop number to the home agent to change, the belonging home agent by one having a hop number equal to or smaller than a second predetermined value when a hop number to the belonging home agent becomes equal to or greater than a first predetermined value,.

Due to this, in usual time, a change of home agent is possible taking into account a hop number of between the mobile node and the home agent. In real-time communication, a change of home agent is possible taking into account a communication delay time. Accordingly, it is possible to implement communications optimized in respect of network load and communication delay time.

Also, the measuring section of a mobile node of the invention may determine the hop number by computing a difference between an initial value of a hop limit field in a header of a packet of IP version 6 sent from the home agent and a value of the hop limit field received.

Due to this, it is possible to measure a hop number of from the home agent over to the mobile node.

Also, the measuring section of a mobile node of the invention may determine the communication delay time by measuring a time of from sending an ICMP echo request packet to the home agent to receiving an ICMP echo reply packet.

Due to this, it is possible to measure a round trip time, hence enabling to estimate a distance of from the home agent to the mobile node.

Also, the measuring section of a mobile node of the invention may increase a measuring frequency of communication delay time when the moving speed of the mobile node is high, and decreases the measuring frequency when the moving speed is low.

Due to this, the transmission frequency of ICMP echo request packets is changed by a moving speed of mobile node. Accordingly, even when the moving speed is high, it is possible to follow up a change of distance between the home agent and the mobile node. When the moving speed is low, it is possible to suppress useless traffic flowing over the network.

Also, the measuring section of a mobile node of the invention may send an ICMP echo request packet when the number of times of connection changes to the access router becomes an integer times a fifth predetermined value.

Due to this, ICMP echo request packets are sent based on the number of times of access router changes, in view of the point that, when the moving speed of mobile node is high, there are frequent changes of access router while, when the moving speed of mobile node is low, there are less changes of access router. Accordingly, it is possible to suppress useless traffic from flowing over the network.

Also, the home agent selecting section of a mobile node of the invention selects, preferentially, a home agent satisfying at least any of conditions of greatest unoccupied resource, minimum load, least hop number and shortest communication delay time.

Due to this, the mobile node is allowed to select a home agent best suited for the condition.

A method for mobile communications according to the invention comprises: a step of measuring at least any one of a hop number and communication delay time to a belonging home agent by a mobile node; a step of requesting a belonging home agent to delete registration and a new home agent to make registration, when a result of measurement becomes equal to or greater than a predetermined value; a step of deleting a registration of the mobile node by the belonging home agent; and a step of registering the mobile node by the new home agent.

Also, in a method for mobile communications of the invention, the new home agent is to be selected preferentially a home agent satisfying at least any of conditions of greatest unoccupied resource, minimum load, least hop number and shortest communication delay time.

Also, in a method for mobile communications of the invention, the new home agent is notified from a home agent information managing server for managing information about home agents to the mobile node.

As described above, according to the invention, even where the mobile node and the home agents are distant in space, network load can be relieved and handover of mobile node is smoothly carried out. Also, it is possible to swiftly eliminate the resource deficiency of home agent and change the control range.

BRIEF DESCRIPTION OF THE DRAWINGS

Fig. 1 is a diagram showing a configuration of a mobile communication system and a packet path in a first embodiment of the present invention.
Fig. 2 is a diagram of a packet path in the first embodiment of the invention.
Fig. 3 is a configuration diagram of a mobile node in the first embodiment of the invention.
Fig. 4 is a flowchart showing a mobile node operation in the first embodiment of the invention.
Fig. 5 is a flowchart showing a mobile node operation in the first embodiment of the invention.
Fig. 6 is a configuration diagram of a mobile node in the first embodiment of the invention.

Fig. 7 is a flowchart showing a mobile node operation in the first embodiment of the invention.

Fig. 8 is a configuration diagram of an access router in the first embodiment of the invention.

Fig. 9A is a figure showing a home agent information management table in the first embodiment of the invention.

Fig. 9B is a figure showing a home agent information management table in the first embodiment of the invention.

Fig. 10 is a configuration diagram of a home agent in the first embodiment of the invention.

Fig. 11 is a flowchart showing a home agent operation in the first embodiment of the invention.

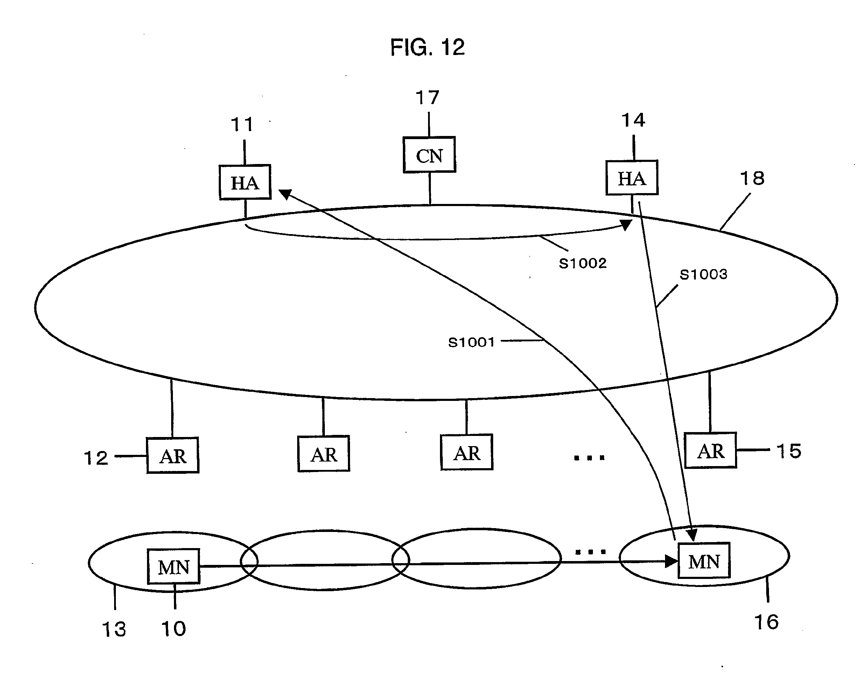

Fig. 12 is a diagram showing a packet path in the first embodiment of the invention.

Fig. 13 is a configuration diagram of a mobile communication system in a second embodiment of the present invention.

Fig. 14 is a diagram showing a packet path in a second embodiment of the invention.

Fig. 15A is a flowchart showing a home agent information storing server operation in the second embodiment of the invention.

Fig. 15B is a flowchart showing a mobile node operation, an access router operation, and a home agent operation in the second embodiment of the invention.

Fig. 16 is a configuration diagram of a home agent information storing server in the second embodiment of the invention.

Fig. 17 is a diagram showing a configuration of a mobile communication system and a packet path in a third embodiment of the present invention.

Fig. 18 is a flowchart showing a mobile node operation in the third embodiment of the invention.

Fig. 19 is a flowchart showing a mobile node operation in the third embodiment of the invention.

Fig. 20 is a configuration diagram of a home agent in the third embodiment of the present invention.

Fig. 21 is a flowchart showing a home agent operation in the third embodiment of the invention.

Fig. 22 is a flowchart showing a home agent operation in the second embodiment of the invention.

Fig. 23 is a diagram showing a prefix table in the third embodiment of the invention.

Fig. 24 is a diagram showing a configuration of a mobile communication system and a packet path in a fourth embodiment of the invention.

Fig. 25 is a figure showing a registration/deregistration request message in the first embodiment of the invention.

Fig. 26 is a figure showing a registration answer message in the first embodiment of the invention.

Fig. 27 is a figure showing a binding cache information request message in the first embodiment of the invention.

Fig. 28 is a figure showing a binding cache information notifying message in the first embodiment of the invention.

Fig. 29 is a figure showing a home agent information request message other than an access router in the invention.

Fig. 30 is a figure showing a home agent information notifying message other than an access router in the invention.

Fig. 31 is a figure showing a home agent information request message to an access router in the invention.

Fig. 32 is a figure showing a home agent information notifying message from an access router in the invention.

Fig. 33 is a configuration diagram of a conventional radio station.

BEST MODE FOR CARRYING OUT THE INVENTION

The present invention will now be explained in conjugation with the drawings.

(Embodiment 1)

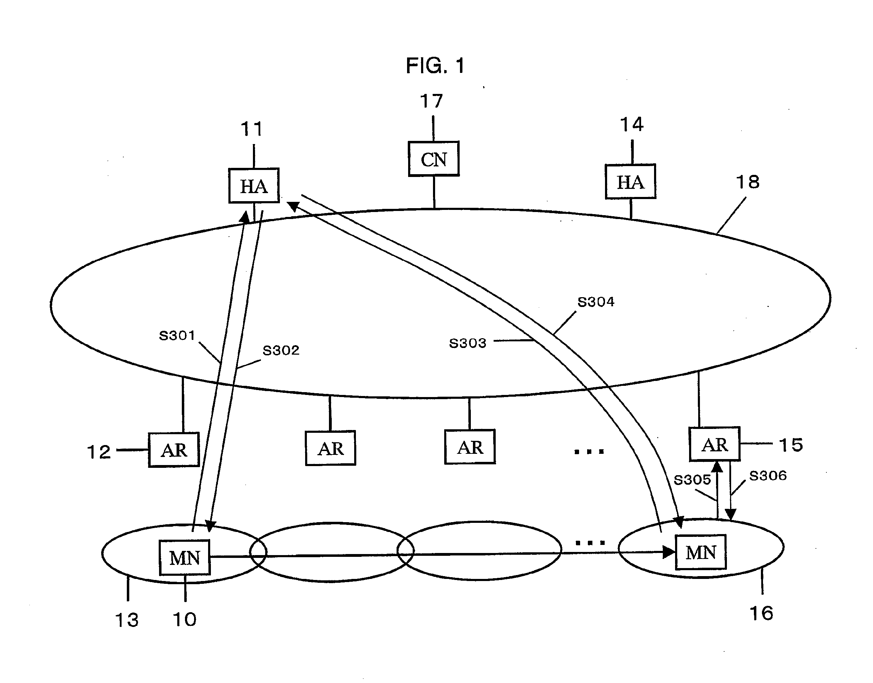

Fig. 1 is a configuration diagram of a mobile communication system in embodiment 1 of the present invention.

In Fig. 1, a mobile node 10 is a mobile communication terminal, and home agents 11, 14 are routers to which the mobile node 10 can be allowed to register the current care-of addresses. Access routers 12, 15 are routers accessible to the Internet to which the mobile node 10 can be allowed to access. Control ranges 13, 16 are respective ranges in which the access router 12, 15 can have communications. A correspondent node 17 is a communication terminal for communications with the mobile node 10, while an IP network 18 is an electric communication line over which an IP protocol is supported.

With the configuration of Fig. 1, the operation is explained in the below.

First, the mobile node 10 has an access to the access router 12 to get a care-of address, and then sends the home agent 11 a binding update message requesting a registration(step S301). The home agent 11 replies a binding agreement message allowing the mobile node 10 for registration(step S302).

Next, the mobile node 10 moves to have an access to the access router 15, to get a new care-of address. Thereafter, a binding update message is sent to the home agent 11(step S303).

Next, the home agent 11, after receiving the binding update message 303, measures a hop number (the number of router stages to pass) to the mobile node 10 and measures a communication delay time. When the measured hop number value or communication delay time is equal to or greater than a predetermined threshold, the home agent 11 sends the mobile node 10 a binding acknowledgement message instructing for a change of home agent(step S304).

Otherwise, when the mobile node 10 receives the binding acknowledgement message (step S304), it is possible to measure a communication delay time together with a hop number to the home agent 11 thereby determining a change of home agent.

Then, when determining a change of home agent, the mobile node 10 sends the access router 15 a home agent request message requesting home agent information, such as an address of a neighboring home agent(step S305).

Next, the access router 15, when receiving the home agent request message (step S305), selects a suitable home agent from a home agent information management table as a set of pieces of home agent information about neighboring home agents being held, and sends the mobile node a home agent information notifying message describing the information about the selected home agent(step S306).

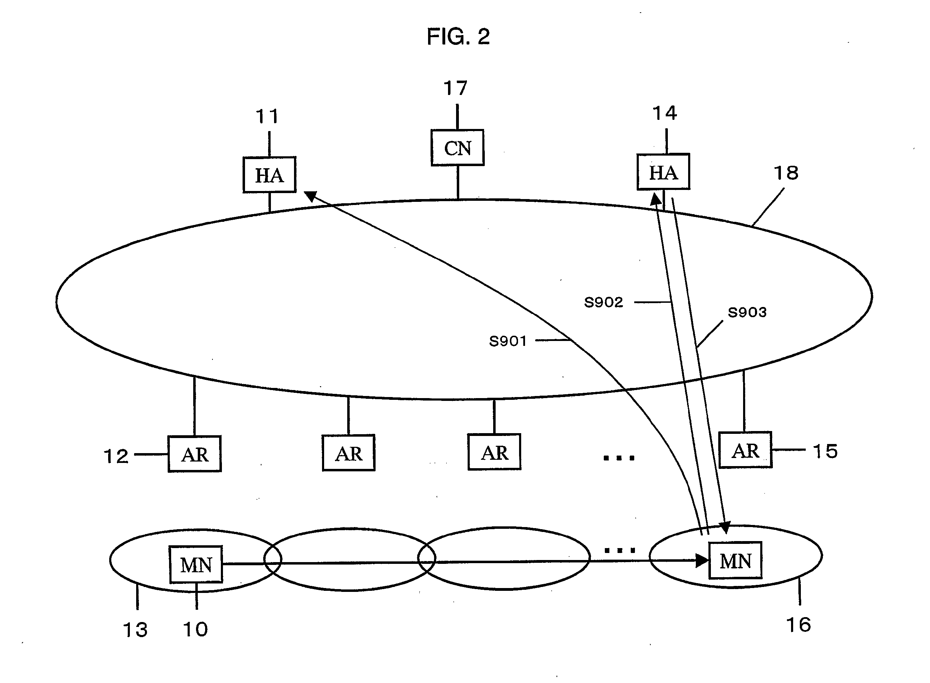

Then, the mobile node 10, after receiving the home agent information notifying message (step S306), measures a communication delay time together with a hop number to the home agent described in the message. In the case both or any of the measured hop number and communication delay time is equal to or smaller than a predetermined threshold, the mobile node determines a change to that home agent. Herein, explanation is made on a case with a change of from a home agent 11 to home agent 14, by using Fig. 2.

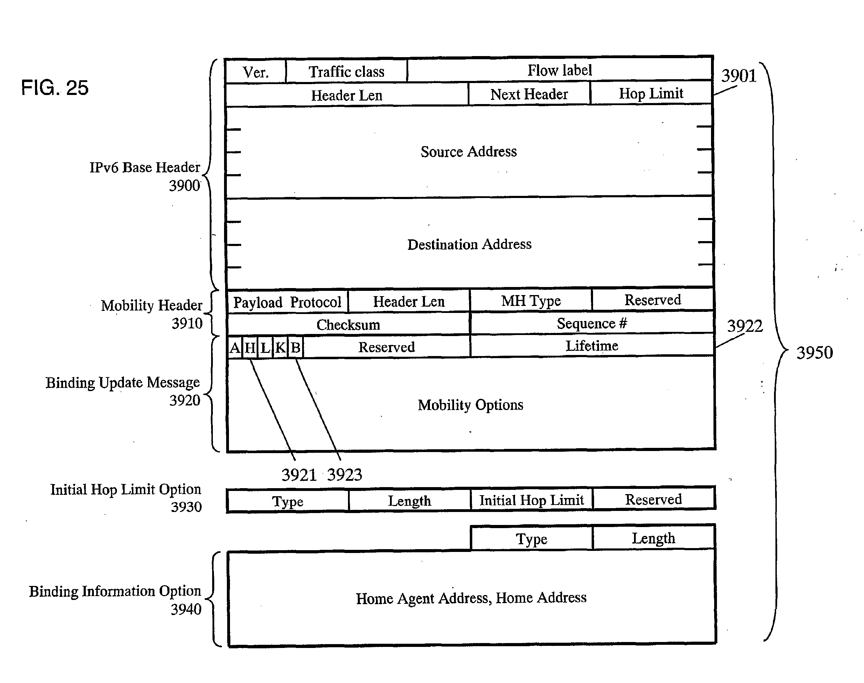

The mobile node 10 sends the home agent 11 a binding update message 3950 that the lifetime field 3922 shown in Fig. 25 is set at '0' (step S901), and a changed-to home agent 14 a binding update message 3950 which is set the home agent registration request flag (H) 3921 requesting for a registration(step S902).

Next, the home agent 11, after receiving the binding update message 3950(step S902), deletes the mobile node of an entry to the old home address. Also, the changed-to home agent 14, after receiving the binding update message 3950(step S902), generates or updates an entry to mobile node 10.

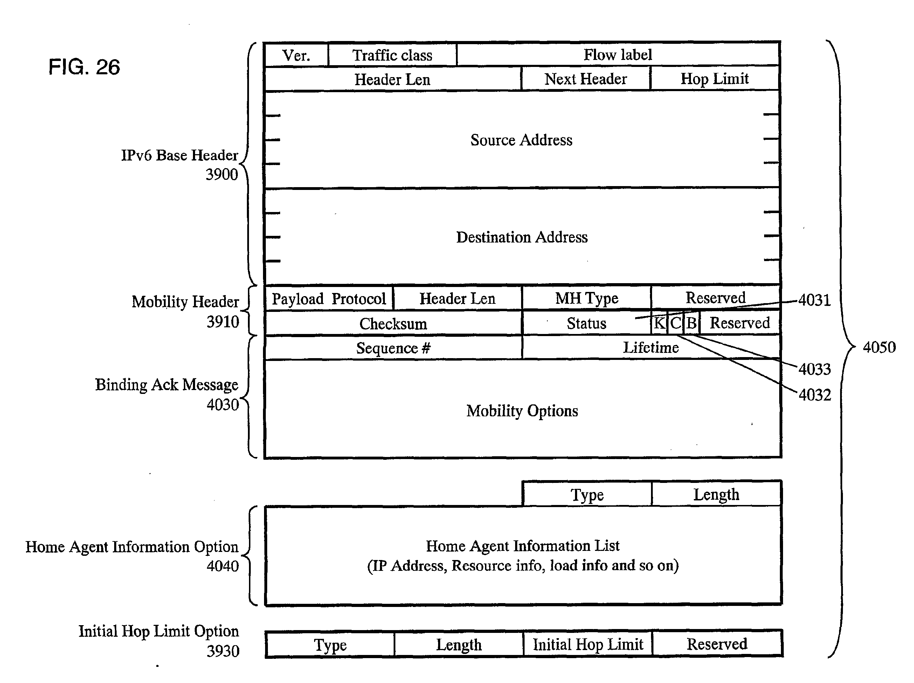

Next, the home agent 11 transmits a binding acknowledge message 4050 which is the registration reply message which notifies having recognized the registration shown in Fig. 26 to the mobile network 10 (Step S903).

Next, explanation is made on the detailed operation of each apparatus.

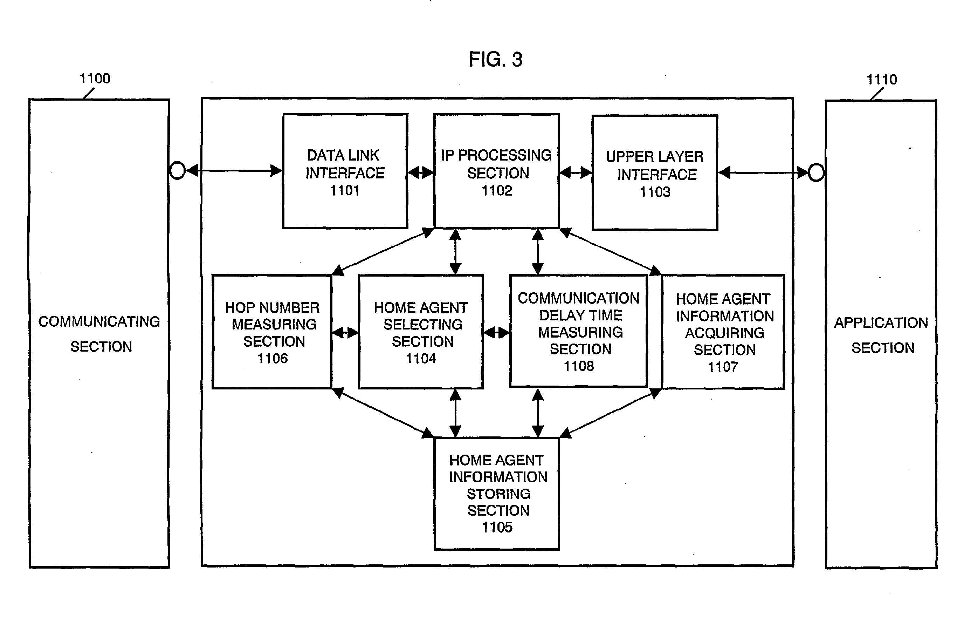

Fig. 3 is a diagram showing a mobile node 10 configuration. A communicating section 1100 is for wireless-connection to the access router. A data link interface 1101 is to exchange packets with a data link layer. An IP processing section 1102 is to carry out IP processes including mobile IP. A higher layer interface 1103 is to exchange packets with an application section 1110 as a higher layer. A home agent selecting section 1104 is to select one out of a plurality of home agents. A home agent information management storing section 1105 is to store home agent information. A hop-number measuring section 1106 is to measure a hop number to the home agent or correspondent node. A home agent information acquiring section 1107 is to acquire home agent information. A communication delay time measuring section 1108 is to measure a communication delay time to the home agent or correspondent node. An application section 1110 is to provide a service the mobile node possesses.

Next, the operation of the mobile node 10 is explained by using the flowchart of Fig. 1, Fig. 2 and Fig. 4.

When the mobile node 10 moves to a different access router, the communication section 1100 detects a handover and notifies it to the home agent selecting section 1104 (step S1501).

Then, the home agent selecting section 1104 sends the home agent 11 a binding update message 3950(step S1502), and waits for a reception of a binding acknowledgement message 4050 from the home agent 11 (step S1503). Incidentally, Step S1502 corresponds to Step S303 of Fig. 1.

Next, the mobile node 10 receives a binding acknowledgement message 4050 from the home agent 11 (step S1504) and makes sure of whether a home agent change instruction flag 4032 to be set on the home agent 11 has been set or not (step S1505). Herein, the format of binding acknowledgement message 4050 is shown in Fig. 26. Also, the home agent change instruction flag (C) 4032 is to instruct the mobile node to change the home agent. Incidentally, Step S1504 corresponds to Step S304 of Fig. 1.

When this home agent change instruction flag 4032 has not been set, i.e. when a binding acknowledgement message 4050 representative of a successful registration is received, the home agent selecting section 1104 carries out a binding acknowledgement process, such as updating a binding update list (step S1508). Thereafter, the process returns to the step S1501.

On the other hand, when receiving a binding acknowledgement message 4050 in which the home agent change instruction flag 4032 has been set, the home agent selecting section 1104 carries out the following home agent selecting process (step S1506).

This selecting process is explained in the below.

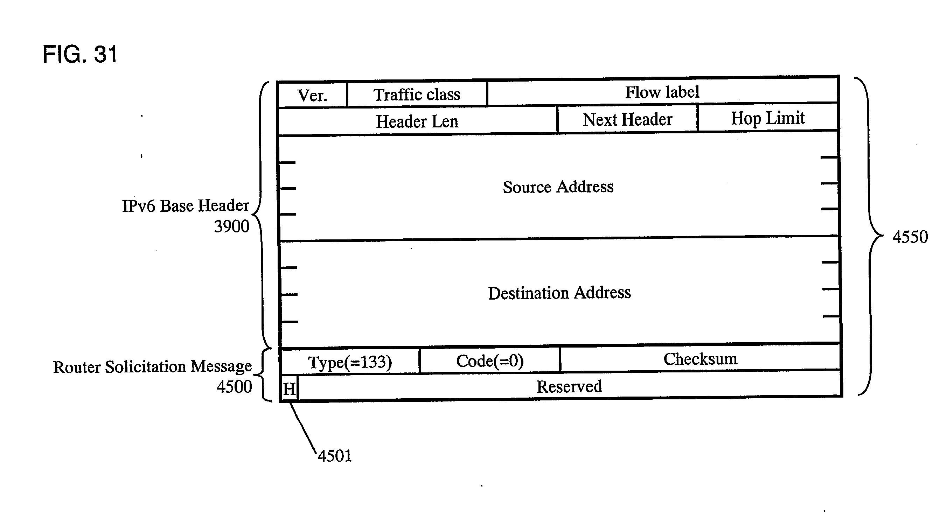

First, the home agent information acquiring section 1107, in order to acquire the information of a changed-to candidate home agent, sends the access router 15 a home agent information request message (step S305) and waits for a home agent information notifying message as a reply thereto. Fig. 31 shows a format of home agent information request message 4550. This home agent information request message 4550 is an addition of a flag (H) 4501 representative of a request for home agent information to the conventional router solicitation message.

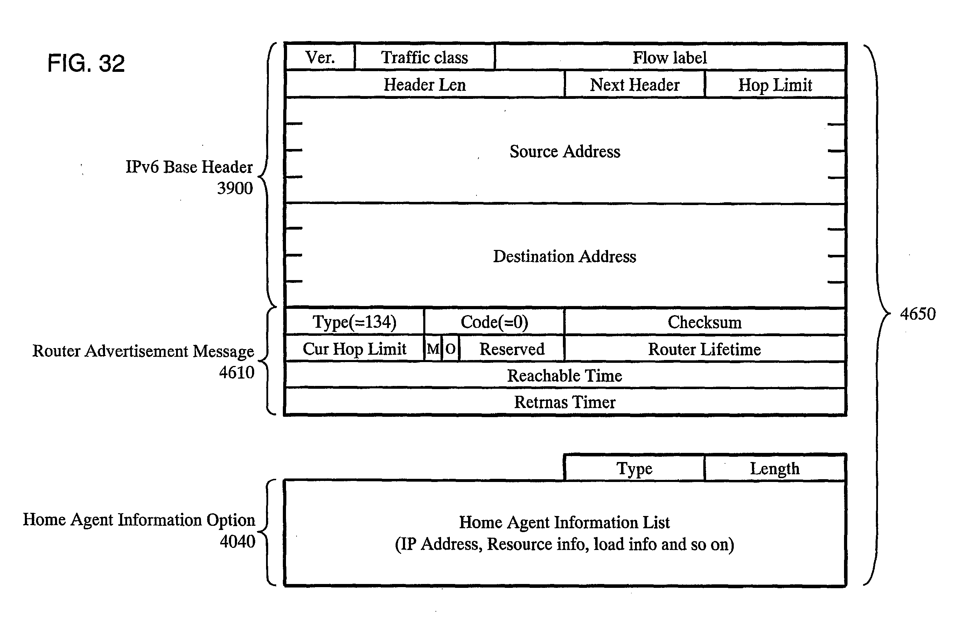

Next, the home agent information acquiring section 1107, after receiving a home agent information notifying message 4650 shown in Fig. 32 from the access router 15 (step S306), holds the content thereof in the home agent information storing section 1105.

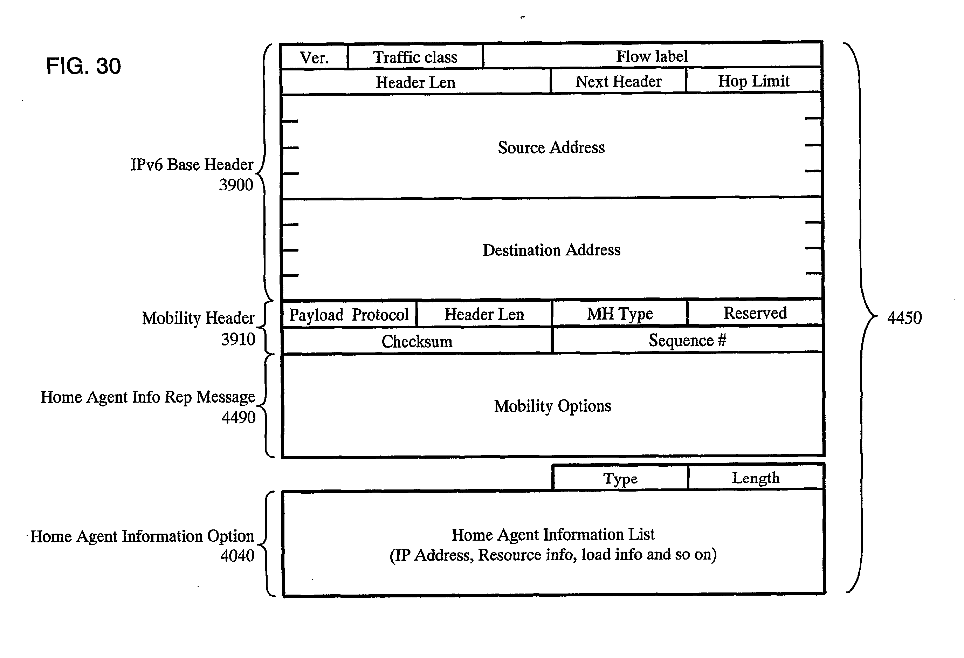

Fig. 32 shows a format of home agent information notifying message 4650. As shown in Fig. 30, the home agent information notifying message 4650 is a router advertisement message 4610 which is added with a home agent information option 4040 that includes a home agent information. The home agent information option 4040 contains home agent addresses, resource information, load information and so on.

Meanwhile, in the case that a home agent address and hop number or a communication delay time is included in the home agent information notifying message 4650, the home agent selecting section 1104 decides as a changed-to agent a home agent minimal in hop number or communication delay time of among those included in the message.

Meanwhile, the home agent selecting section 1104 may set a predetermined threshold in a Hop Limit field of an ICMP echo request message so that, when the ICMP echo reply message is sent back, the home agent as a destination can be determined as a changed-to agent.

Incidentally, the home agent selecting section 1104 may hold, by manual setting, a home agent address of changed-to candidate in the home agent information management table 1105.

Meanwhile, in the case only a home agent address is included in the message, the hop-number measuring section 1106 sends a packet for the hop-number measuring section 1106 to measure a hop number to the address shown in the message. For example, this packet is an ICMP echo request message. As a reply thereto, waited is an ICMP echo reply message from the home agent. IPv6 Base Header 3900 as shown in Fig. 25 is attached to these messages. The hop-number measurement is performed using the Hop Limit field 3901 in this header. Namely the hop-number measuring section 1106 receives the ICMP echo reply message and makes reference to a field (Hop Limit field 3901) representative of a hop number in a received-message IP header, to determine a difference from an initial value set at the hop-number measuring section 1106 thereby measuring a hop number. Otherwise, hop-number measurement is made by using a traceroute command.

Meanwhile, the communication delay time measuring section 1108 measures a communication delay time. This measurement is by that the timer which is not shown in Fig. 3 measures a time of from sending an ICMP echo request message to receiving the ICMP echo reply message.

The home agent selecting section 1104, in case both or any one of the measured hop number and communication delay time is equal to or smaller than a predetermined hop number or communication delay time, determines a change to that home agent. Also, the home agent selecting section 1104, unless both or any one of the hop number and communication delay time for all the addresses included in a home agent information option 4040 of the home agent information notifying message 4650 is equal to or less than a predetermined hop number or communication delay time, determines as a changed-to agent a home agent smallest in the hop number or communication delay time including the current home agent or otherwise does not make a change of home agent. Incidentally, the home agent selecting section 1104, in case only one home agent address is included in the home agent information notifying message 4650, determines that home agent as a changed-to agent.

The above is the home agent selection process (step S1506).

Next, the home agent selecting section 1104, after selecting a changed-to home agent 14, carries out the below home agent change process (step S1507).

First, the home agent selecting section 1104 sends, to the home agent 14 determined as a changed-to agent, ICMP mobile prefix request message to request a home prefix which is subnetwork prefix of a home link, thus waiting for a ICMP mobile prefix advertising message.

Next, the home agent selecting section 1104, after receiving a home prefix notifying message, generates a home address.

Thereafter, as shown in Fig. 2, the home agent selecting section 1104 sends the home agent 11 a binding update message 3950

(step S901) that a formerly-used home address is set to the home address destination option and a Lifetime field 3992 is set at '0', and further sends the changed-to home agent 14 a binding update message 3950 of home registration (step S902).

The above is the home agent changing process (step S1507). Thereafter, the process returns to step S1501.

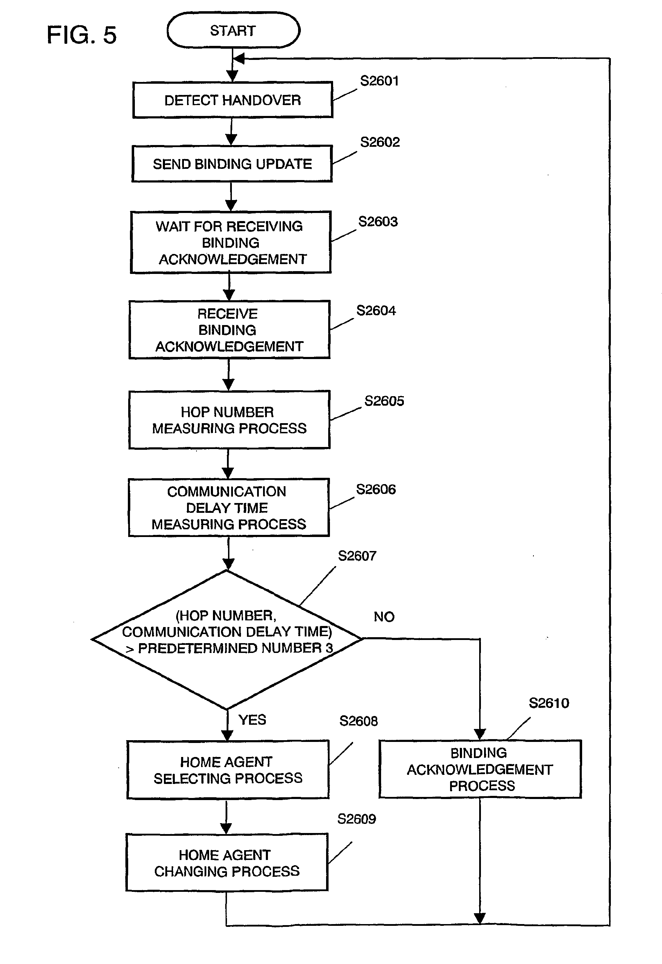

This embodiment shows the case that the home agent measured a hop number and communication delay time, to notify a change of home agent to the mobile node 10. However, the measurement of a hop number and communication delay time can be on the mobile node 10. The operation in such a case is explained by the use of the flowchart of Fig. 5.

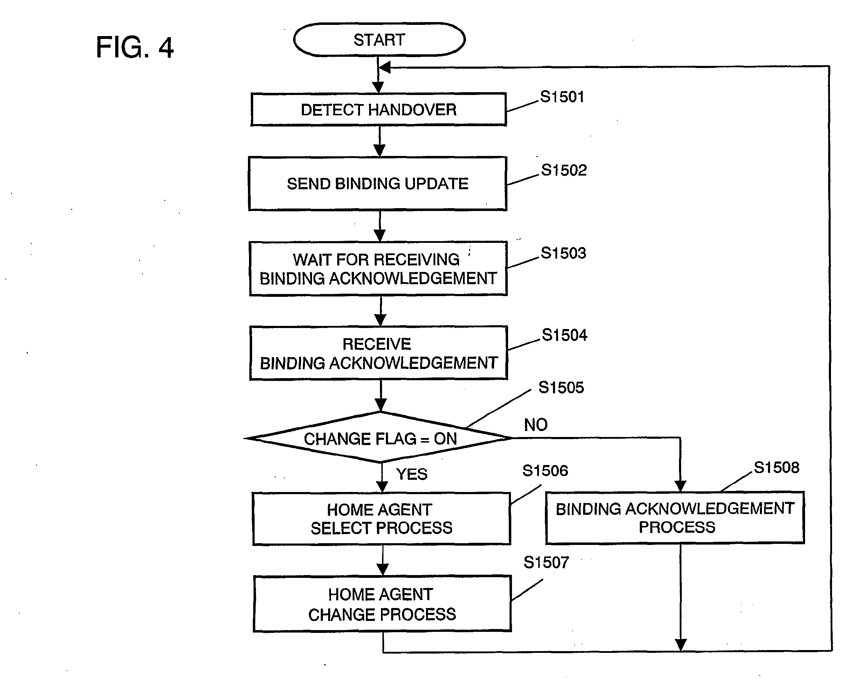

The difference from the operation shown in Fig. 4 lies in that, in step S2605 and step 2606, the mobile node 10 does not receive a notification of a change instruction of home agent from the home agent 11 but measures, when receiving a binding acknowledgement message 4050, a hop number and communication delay time thereby determining whether to change the home agent or not. Namely, the home agent selecting section 1104, when receiving a binding acknowledgement message 4050 (step S2604), instructs the hop-number measuring section 1106 and communication delay time measuring section 1108 to make a measurement of both or any one.

The hop-number measuring section 1106 measures a hop number to the home agent 11 (step S2605) while the communication delay time measuring section 1108 measures a communication delay time (step S2606). From a measured hop number and communication delay time, the home agent selecting section 1104 makes a comparison with a predetermined value (step S2607). Otherwise, the hop-number selecting section 1106 and communication delay time measuring section 1108 compare these with respective predetermined values, to output a result thereof to the home agent selecting section 1104. Incidentally, selecting a home agent using a hop number and communication delay time is possible by the following method.

Next, the home agent selecting section 1104 compares the predetermined value #3 as the hop- number and communication delay time which were measured like the home agent (S2607). The subsequent processing step S208 or subsequent step S2610 is the same as above-mentioned step S1506 or above-mentioned step S1508.

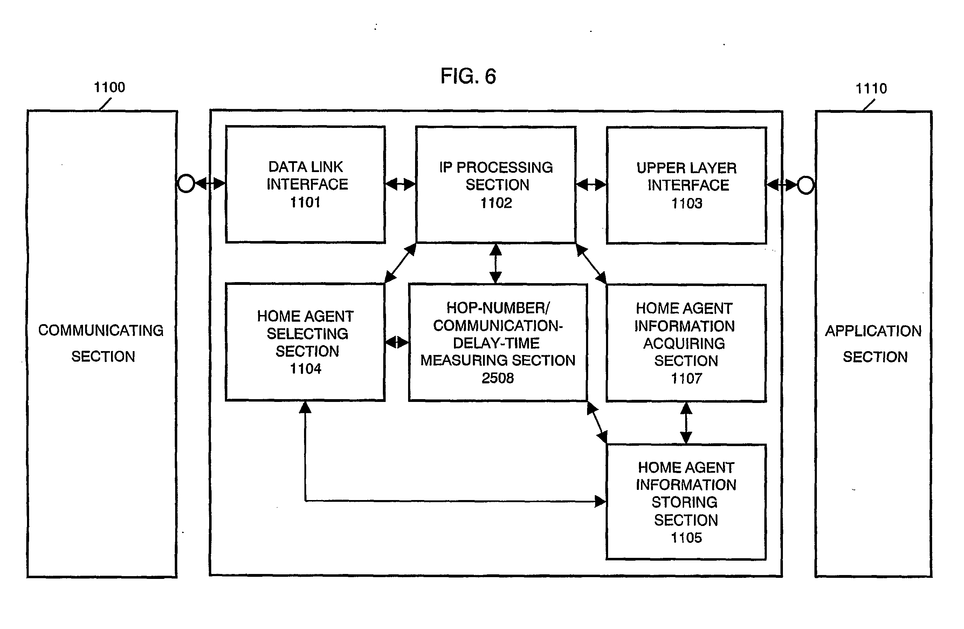

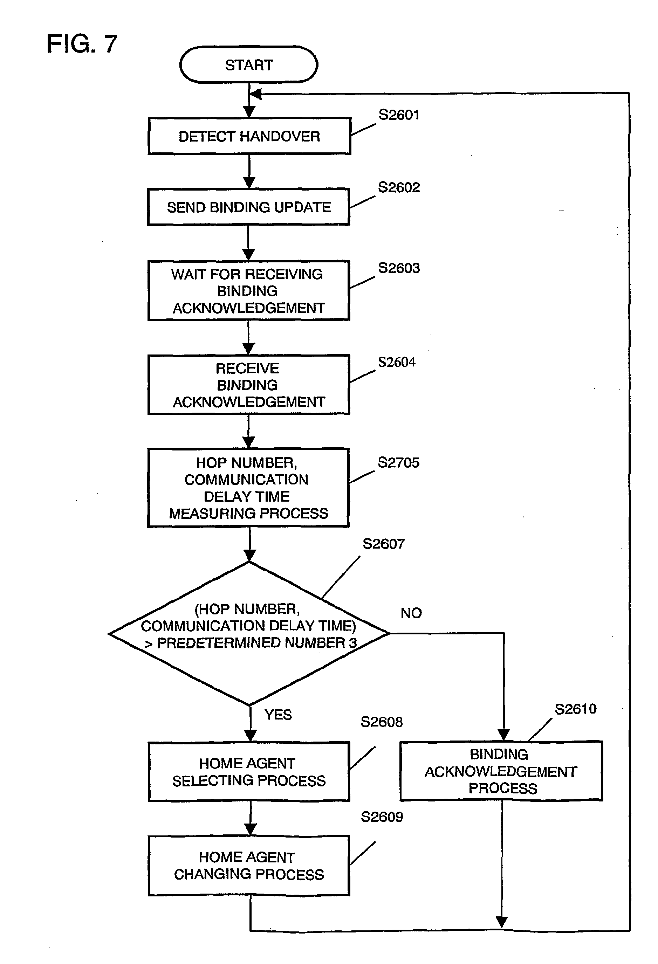

Fig. 6 is a configuration diagram of the mobile node 10 in this case. Meanwhile, Fig. 7 is a flowchart showing the operation of mobile node 10.

In Fig. 6, a hop-number/communication-delay-time measuring section 2508 measures a hop number and communication delay time (step S2705).

The measurement results can be changed in their applications depending upon a communication content. For example, in case the communication content between the mobile node 10 and the correspondent node 17 has a real-time nature such as voice communication, the home agent is changed by communication time measurement. If not so, home agent change can be by hop-number measurement. Otherwise, by computing a value taking account of both of communication delay time and hop number, the home agent is changed depending upon a magnitude thereof. For example, used is a determination value A to be computed in Equation (1).

$$A = \alpha \times (\text{communication delay time}) + \beta \times (\text{hop number}) \qquad (1)$$

where $\alpha$, $\beta$ is a communication delay time and a weight for hop number. By adjusting these, it can be changed which one is to be emphasized of communication delay time and hop number.

Meanwhile, in the case there are a plurality of correspondent nodes, measuring a communication delay time may be only for the correspondent node in real-time communication with the mobile node 10, thereby changing the home agent. Otherwise, by comparing the sum of the values determined in the above Equation (1) for each correspondent node, the home agent may be changed.

As described above, because the mobile node measures a hop number or communication delay time, there is no need to measure a hop number or communication delay time on every mobile node the home agent belongs. Consequently, the load on the home agent can be relieved, enabling load distribution to the mobile nodes.

Incidentally, the mobile node 10 can use a dynamic DNS server (hereinafter referred to as "DNS") in communications with the correspondent node 17. In such a case, the home agent selecting section 1104 sends the changed-to home agent 14 a binding update message 3950 and registers a new home address to the DNS. Thereafter, the correspondent node 17 can make an inquiry to the DNS as in the usual and acquire a new home address of the mobile node 10, thereby enabling communications. Otherwise, the mobile node 10 can notify the correspondent node 17 of a change of its own home address.

Meanwhile, in the case that the mobile node 10 is in communication with the correspondent node 17 via the home agent, the mobile node 10 can measure a hop number to the correspondent node 17 thereby changing the home agent. In this case, the hop measuring section 1106 sends the correspondent node 17 an ICMP echo request message and receives an ICMP echo reply message as a reply thereto. At this time, the received message is being tunneled by the home agent, wherein the hop number between the mobile node 10 and the correspondent node 17 can be determined by the below equation.

$$(\text{the hop number between mobile node and correspondent node})$$

$$= (\text{hop number determined by outer header}) + (\text{hop number determined by outer header}) - 1$$

Meanwhile, in the case that the mobile node 10 is in communication with a plurality of correspondent nodes, realization is possible by measuring a hop number on a correspondent node in communications most frequently or a correspondent node in real-time communications.

Meanwhile, as for communication delay time measurement, besides that the mobile node 10 measures a communication delay time each time the access router is changed, the following methods may be used:

1. measuring a communication delay time with a constant period,
2. measuring a communication delay time in the case the number of times of access router changes becomes an integer times a certain value,
3. measuring a communication delay time in the case the moving distance measured by the GPS becomes an integer times a predetermined value.

Incidentally, concerning the first item, the mobile node 10 can be set with an increased frequency of communication delay time measurement when the moving speed of the mobile node 10 is high, i.e. when the time interval of access router changes is short, and a decreased frequency of communication delay time measurement can be set when the moving speed is low, i.e. when the time interval of access router changes is long.

Also, beside that a change of home agent is decided when communication delay time is equal to or greater than a threshold, it is possible to store past communication delay time to make estimation by a transition thereof so that a home agent change is decided prior to reaching a threshold or greater.

As described above, for the mobile node 10, when the hop number or communication delay time is greater than a predetermined value, switching over the home agent makes it possible to reduce the route of a control packet via the home agent. This can relieve network load and reduce communication delay.

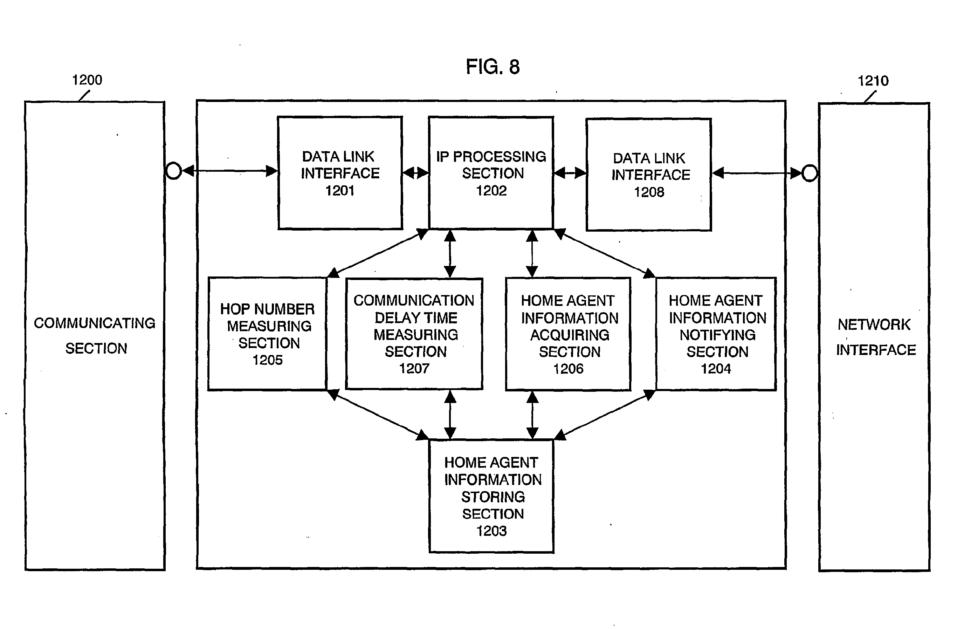

Fig. 8 is a diagram showing a configuration of the access router 15. A communicating section 1200 is for wireless connection with a mobile node 10. A data link interface 1201, 1208 is for packet exchange with the data link layer. An IP processing section 1202 is for IP process including mobile IP. A home agent information storing section 1203 is stored with the information of neighboring home agents. A home agent information notifying section 1204 is to notify a mobile node 10 of home agent information. A hop-number measuring section 1205 is to measure a hop number to a home agent. A home agent information acquiring section 1206 is to acquire home agent information. A communication delay time measuring section 1207 is to measure a communication delay time to a home agent. A network interface 1210 is for connection to an IP network.

The operation of the access router is explained.

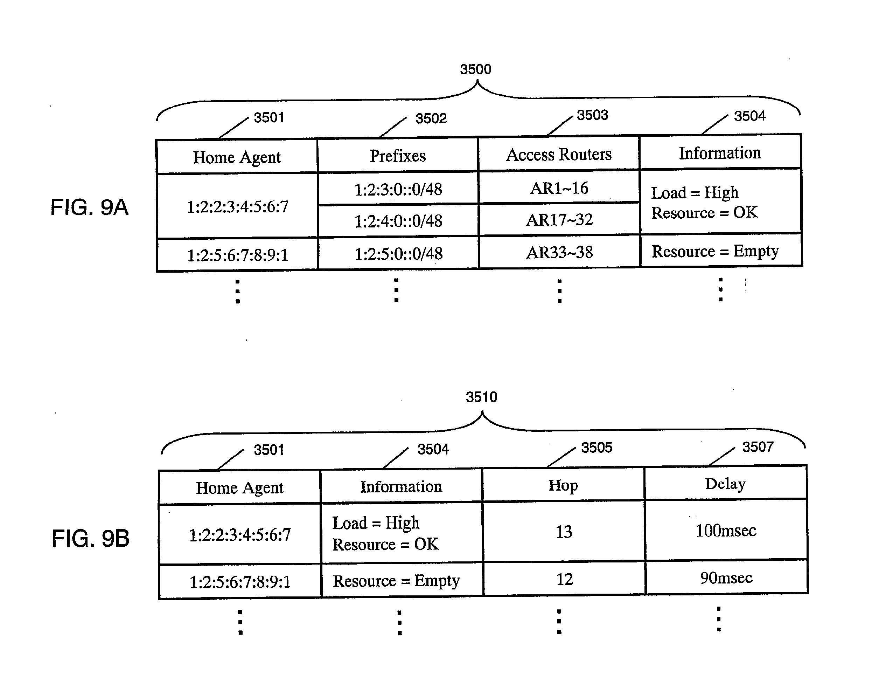

The access router holds a home agent information management table 3510 in the home agent information storing section 1203. Fig. 9B shows the home agent information management table 3510. The home agent information management table 3510 includes at least one or more home agent address 3501. It may include a hop number 3505 or communication delay time 3507 at between the access router 15 and the home agent. The home agent address is acquired by manual setting or by DHCP.

Meanwhile, in the case that a hop number is included in the home agent information management table 3510, the access router 15 makes measurement in advance.

In the case that the access router 15, in advance, measures a hop number to the home agent, the hop-number measuring section 1205 sends the home agent an ICMP echo request message, to wait for an ICMP echo reply message from the home agent. The hop-number measuring section 1205, after receiving an ICMP echo reply message, makes reference to the header in the message, and measures a hop number by using a similar method to that of the mobile node. The communication delay time is determined by measuring a time of from sending an ICMP echo request message to receiving an ICMP echo reply message.

Next, explanation is made on the operation at a time that the access router 15 receives a home agent information request message 4550 from the mobile node 10 by using Fig. 1.

First, the home agent information notifying section 1204, after receiving a home agent information request message 4550 from the mobile node 10 (step S305), makes reference to the home agent information management table 3510 held by itself and generates a home agent information notifying message 4650, to send it to the mobile node 10. The home agent information notifying message 4650, including at least one home agent address, may include a hop number of between the access router and the home agent.

Incidentally, as shown in this embodiment, the home agent information option 4040 may be included in a router advertisement message notifying the prefix information about the access router, or can configure a packet by itself.

Incidentally, in the notification method of home agent information, a home agent information notifying message 4650 may be notified as a reply to a home agent information request message 4550 from the mobile node 10 to the access router 15. Otherwise, the access router 15 may notify, by broadcast or multicast, a home agent information notifying message 4650 to which the access router 15 periodically notifies home agent information, to the mobile nodes 10 existing within the control range 16 of the access router 15.

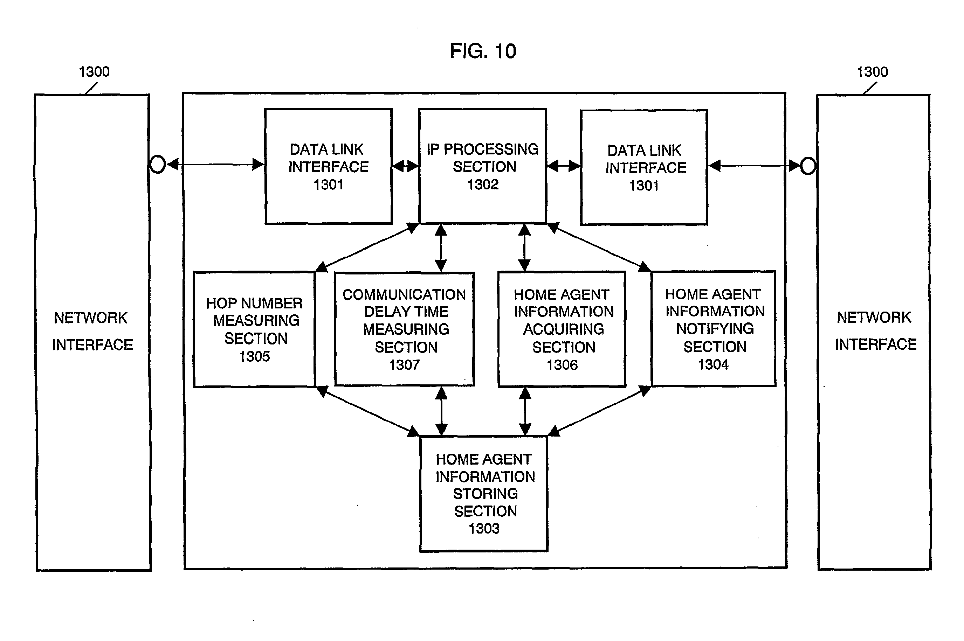

Fig. 10 is a diagram showing a configuration of the home agent. A network interface 1300 is for connection to the IP network. A data link interface 1301 is to exchange packets with the data link layer. An IP processing section 1302 is to carry out an IP process including mobile IP. A home agent information storing section 1303 is stored with the information about neighboring home agents. A home agent information notifying section 1304 is to notify home agent information to the mobile node 10. A hop-number measuring section 1305 is to measure a hop number to a mobile node 10. A home agent information acquiring section 1306 is to get home agent information. A communication delay time measuring section 1307 is to measure a communication delay time to a mobile node 10.

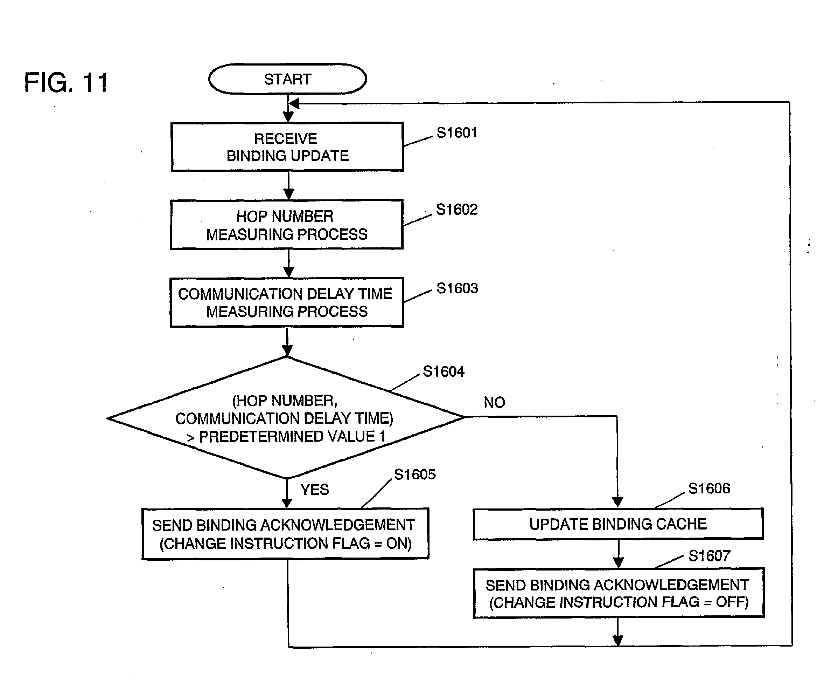

Explanation is made on the home agent operation when a mobile node 10 requests a registration to the home agent, by using a flowchart of Fig. 1 and Fig. 11.

The network interface 1300, when receiving a binding update message 3950 from a mobile node 10 (step S1601), makes a notification to the hop-number measuring section 1305 and communication delay time measuring section 1307. Incidentally, Step S1601 corresponds to Step S301 and S303 of Fig. 1.

Next, the hop-number measuring section 1305 measures a hop number of the received message (step S1602), while the communication delay time measuring section 1307 measure a communication delay time (step S1603).

The hop-number measuring section 1305 makes reference to a field (hop limit field 3901) representing a hop number in an IP header of the received binding update message 3950 and determines a difference from an initial value set in the mobile node 10, thereby determining a hop number. The initial value of hop limit field 3901 is set to a value common among all the binding update messages 3950. Otherwise, an initial hop limit option 3930 representative of an initial value is added into the binding update message 3950 as showing in Fig. 25. The mobile node 10 sets the same value as the initial value set in the hop limit field 3901, and the hop-number measuring section 1305 makes reference to that field. Otherwise, measurement is possible by the use of a traceroute command.

The communication delay time measuring section 1307 sends an ICMP echo request message to the mobile node 10. The communication delay time measuring section 1307, after receiving the ICMP echo request message from the mobile node 10, measures a time of from transmitting the ICMP echo request message to receiving the ICMP echo reply message.

Then, the home agent information notifying section 1304 determines whether the hop number or communication delay time is greater than a threshold, or computes a determination value A according to Equation (1) on the basis of the value measured by the hop-number measuring section 1305 and communication delay time measuring section 1307 and compares it with a predetermined threshold (step S1604).

In the case that the result of comparison is equal to or greater than the predetermined threshold, the home agent information notifying section 1304 sets the home agent change instruction flag (C) 4032 in the binding acknowledgement message 4050 shown in Fig. 26 and sends the binding acknowledgement message 4050 thereof to the mobile node 10 (step S1605). Incidentally, Step S1605 corresponds to Step S302 and S304 of Fig. 1.

On the other hand, in the case that the result of comparison is smaller than the threshold, the home agent information notifying section 1304 approves a registration of the mobile node 10 and processes to home-register the care-of address thereof (step S1605). Then, the home agent information notifying section 1304, after completing that process, sends the mobile node 10 a binding acknowledgement message 4050 set with a value representative of successful registration to the status field (step S1606). Incidentally, Step S1606 corresponds to Step S302 and S304 of Fig. 1.

The threshold differs in its set value depending upon a network scale or configuration. For example, for a certain great scale of network, the hop number is preferably set at approximately 10 - 15 hops.

Now, using Fig. 2, explanation is made on the home agent operation in the case the home agent is changed by the mobile node 10.

In Fig. 2, after the changed-to home agent 14 has received a ICMP mobile prefix solicitation message from the mobile node 10 (step S902), the home agent information notifying section 1304 sends the mobile node 10 a ICMP mobile prefix advertisement message containing a home prefix information option (step S903). This ICMP mobile prefix solicitation message and the ICMP mobile prefix advertisement message are specified on the draft "Mobility Support in IPv6 " of IETF Mobile IP Working Group. Also, the home agent information notifying section 1304 generates or updates an entry in which the home address of mobile node 10 is associated with the current care-of address.

On the other hand, the former home agent 11 erases the entry corresponding to the home address of the binding-cache mobile node 10 by the fact that the home agent information acquiring section 1306 has received from the mobile node 10 a binding update message 3950 with the lifetime field 3922 set at 0 (step S901).

As described above, the home agent makes registration and erasure of a belonging mobile node 10 in accordance with a request from the mobile node 10. This eliminates the necessity of communication of a control packet to and from a mobile node 10 having moved far in distance, making it possible to relieve the load on the network and reduce the communication delay to the mobile node 10.

Incidentally, in this embodiment, the mobile node 10 sends home agent information request message 4550 to the access router 15 at a time that a home agent information becomes necessary. However, it is possible for the access router 15 to periodically send home agent information notifying message 4650 306 to the mobile node 10, so that the mobile node 10 can store the information thereof in the home agent information storing section 1105.

Also, in the present invention, the changed-to home agent 14 generated or updated an entry in which the home address is associated with the current care-of address, by obtaining information from the mobile node 10. However, it is possible for the former home agent 11 to send the changed-to home agent 14 a binding cache information notifying message containing a binding cache entry to mobile node 10 (step S1002).

The concrete example thereof is explained in the below.

First, the mobile node 10 sends the home agent 11 a binding update message 3950 set with a binding cache transfer flag (B) 3923 instructing to transfer a binding cache entry and having a lifetime field 3922 set at zero shown in Fig. 25 (step S1001).

Next, the home agent information acquiring section 1306 of the home agent 11, when receiving it (step S1001), erases the entry in the binding cache corresponding to a home address of mobile node 10. Simultaneously, a binding cache notifying message 1002, containing a binding cache entry corresponding to the mobile node 10, is sent to the changed-to home agent 14 (step S1002).

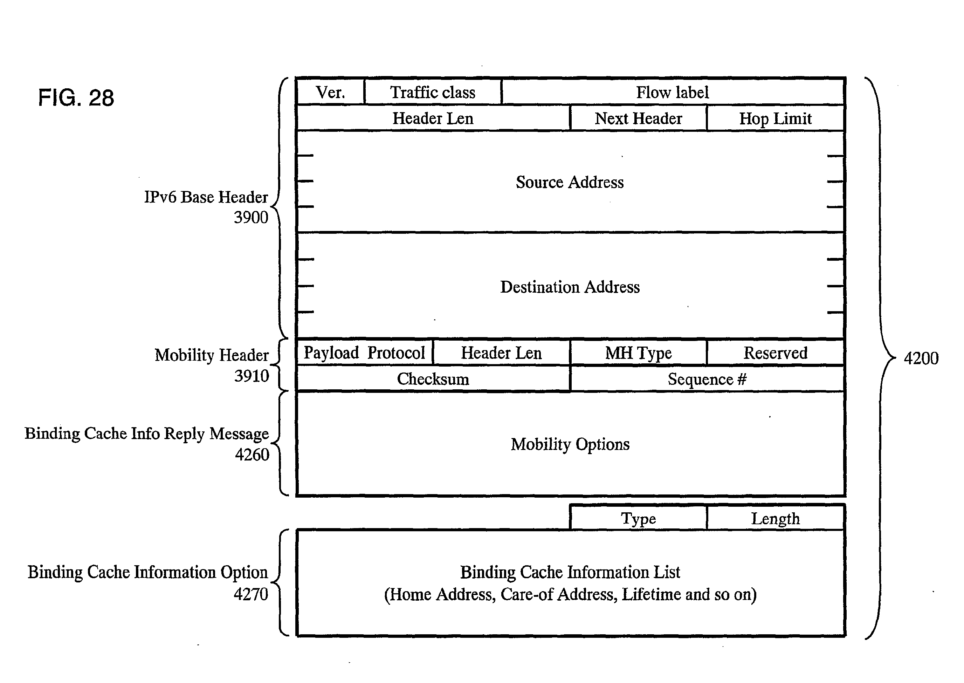

Fig. 28 shows a format of binding cache notifying message 4200. In Fig. 28, the binding cache notifying message 4200 includes a binding cache information option 4270. The binding cache information option 4270 includes the information about mobile node 10 home address, care-of address, lifetime and so on. The changed-to home agent 14, after receiving the binding cache notifying message 4200 (step S1002), generates an entry that the home address of mobile node 10 and the current care-of address are associated by the home agent information acquiring section 1306. The changed-to home agent 14 sends the mobile node 10 a binding acknowledgement message 4050 set with a binding cache transfer end flag (B) 4033 shown in Fig. 26 (step S1003).

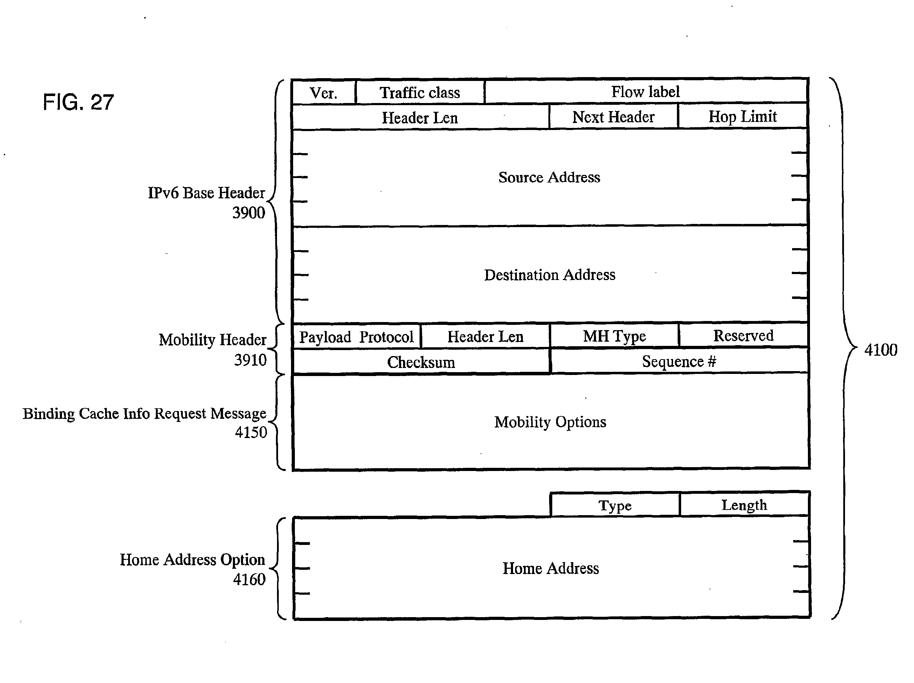

Besides, it is possible, as another method, for the changed-to home agent 14 to request the former home agent 11 for a binding cache entry. Namely, the changed-to home agent 14, when receiving a binding update message 3950 set with a binding cache transfer flag (B) 3923 from the mobile node 10, sends a binding cache information request message 4100 to an address of the former home agent 11 shown in the binding information option 3940. Fig. 27 shows a format of binding cache information request message 4100. As shown in Fig. 27, the binding cache information request message 4100 contains a home address option 416. Requested is the entry to the home address set in the home address option 4160. At this time, the old home address is inserted to the home address option 4160 in the message. The changed home agent 11, after receiving the binding cache information request message 4100, sends the changed-to home agent 14 a binding cache notifying message 4200 containing an entry corresponding to the old home address shown in the home address option 4160 of the message. Fig. 28 shows a format of binding cache notifying message 4200. As shown in Fig. 28, the binding cache notifying message 4200 contains a binding cache information option 4270. The binding cache information option 4270 includes the information about a mobile node 10 home address, care-of address, lifetime and so on. The changed-to home agent 14, after receiving the binding cache notifying message 4200, generates an entry in which the home address of mobile node 10 and the current care-of address are associated. The changed-to home agent 14 sends the mobile node 10 a binding acknowledgement message 4050 set with a binding cache transfer end flag 4033.

As described above, because the information about mobile node 10 is transferred from the former home agent to the changed-to home agent, the changed-to home agent is allowed to take over a variety of pieces of information, e.g. the latest use information of a binding cash entry concerning the mobile node 10. This provides the great merit for the mobile-node user.

Meanwhile, although in this embodiment the mobile node 10, the access router 15 and the home agent measure a hop number and communication delay time, this is not limitative, i.e. it is possible to provide a structure having at least one thereof. In such a case, there is no need of switching between the measured objects depending on a communication content or computing a determination value as in Equation (1).

(Embodiment 2)

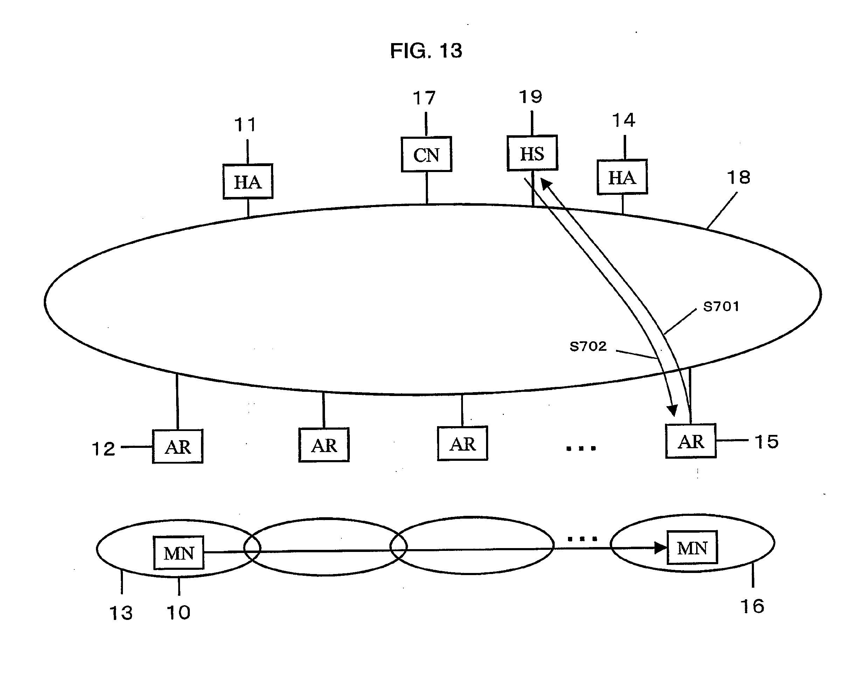

Fig. 13 is a configuration diagram of a mobile communication system in a second embodiment of the invention.

This is different from the mobile communication system of the first embodiment, in that a home agent information storing server 19 is provided to manage home agents.

The home agent information storing server 19 is stored with the addresses, managing prefixes, managing access routers 15, unoccupied resources and load of the home agents existing on the network, in a home agent information management table 3500 shown in Fig. 9A. In the case of requested from a home agent, access router 15 or mobile node 10, a suitable home agent is selected and notified from the home agent information management table 3500.

For example, as shown in Fig. 13, the access router 15 sends a home agent information request message 4550 to the home agent information storing server 19 in order to get the information about a home agent possessing the same in its control range (step S701).

Then, the home agent information storing server 19 selects a home agent having the access router 15 in its control range from the home agent information management table 3500, and sends the access router 15 a home agent information notifying message 4650 containing the information of that home agent (step S702).

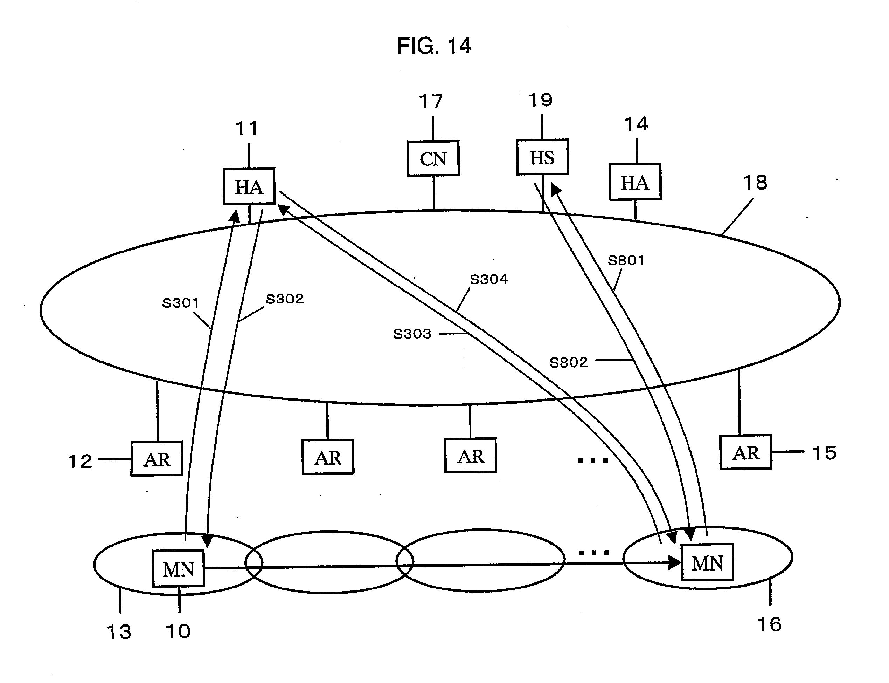

Otherwise, as shown in Fig. 14, the mobile node 10 sends a home agent information request message to the home agent information storing server 19 in order to get the information of a home agent having a prefix thereof in its control range (step S801).

Next, the home agent information storing server 19 selects a home agent having a prefix of mobile node 10 in the control range from the home agent information management table 3500, and sends the mobile node 10 a home agent information notifying message containing the information of that home agent (step S802).

The operation in the present embodiment configuration is explained by using Fig. 14.

The mobile node 10 moves to have an access to a different access router 12, 15, wherein the process up to deciding a change of home agent (step S301 to S304) is similar to that of embodiment 1.

Then, the mobile node 10, when decided a change of home agent, sends a home agent information request message to the home agent information storing server 19 (step S801).

When receiving the home agent request message (step S801), the home agent information storing server 19 selects a suitable home agent from the home agent information management table 3500 and sends the mobile node 10 a home agent information notifying message describing the selected home agent (step S802).

The subsequent process is similar to that of the first embodiment.

Incidentally, when the mobile node 10 decides a change of home agent, home agent information can be requested to the access router 15. In this case, realization is possible by that the access router 15 sends the home agent information storing server 19 a home agent request message and the home agent information obtained from the home agent information storing server 19 is notified to the mobile node 10.

Now, explanation is made on the operation of each apparatus.

The configuration of the mobile node 10 is similar to that of the first embodiment.

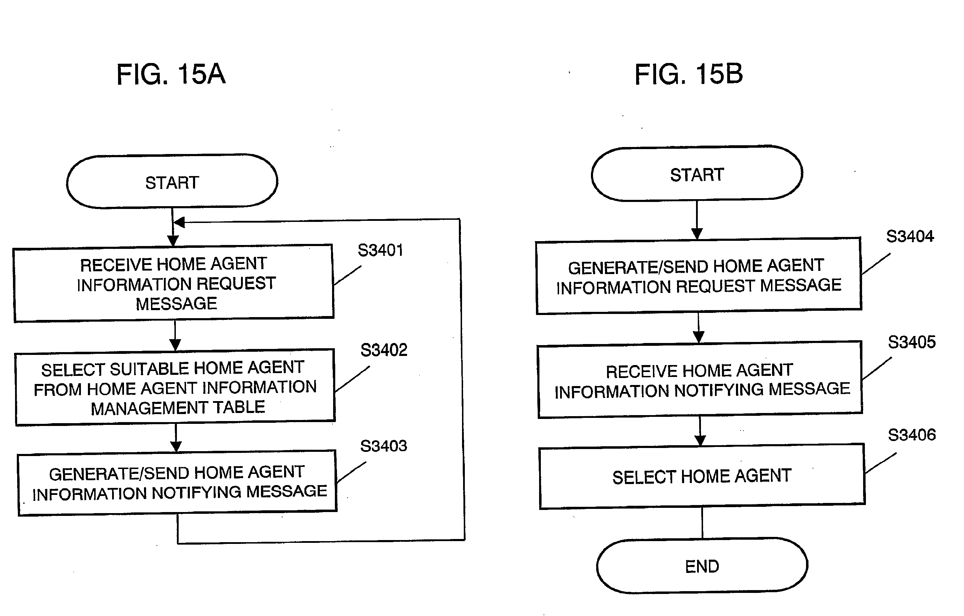

Meanwhile, the operation of the mobile node 10 is different from that of the first embodiment in that home agent information is acquired from a home agent information storing server 19. This is explained by using a flowchart of Fig. 15B.

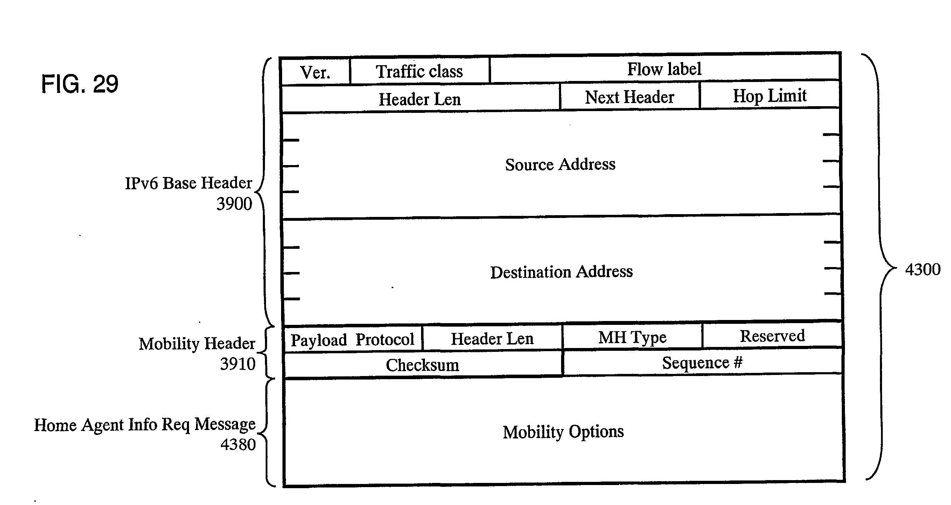

First, the home agent information acquiring section 1107 generates a home agent information request message and sends it to the home agent information storing server 19 (step S3404). Fig. 29 shows a format of home agent information request message 4300. Incidentally, step S3404 corresponds to Step S801 of Fig. 14.

Then, the home agent information acquiring section 1107 receives the home agent information notifying message from the home agent information storing server 19 (step S3405) and stores an address of home agent to the home agent information storing section 1105. Fig. 30 shows a format of home agent information notifying message 4450. The home agent information notifying message 4450 is added of a home agent information option 4040 as shown in Fig. 30. The home agent information option 4040 includes IP address, resource information, and load information and so on of the home agent. Incidentally, step S3405 corresponds to Step S802 of Fig. 14.

Next, the home agent selecting section 1104 selects a home agent (step S3406). This process, however, is similar to that of the first embodiment.

Now, the operation of the access router 15 is explained. Incidentally, the configuration of the access router 15 is similar to that of the first embodiment.

The operation of the access router 15 is different from that of the first embodiment in that home agent information is acquired from the home agent information storing server 19.

Fig. 15B is a flowchart which shows operation of an access router.

First, the home agent information acquiring section 1206 generates a home agent information request message 4300 and sends it to the home agent information storing server 19 (step S3404). Incidentally, step S3404 corresponds to Step S701 of Fig. 13.

Then, the home agent information acquiring section 1206 receives the home agent information notifying message 4450 from the home agent information storing server 19 (step S3405), and stores an address of home agent to the home agent information storing section 1203. Incidentally, step S3405 corresponds to Step S702 of Fig. 13.

The subsequent processes are similar to those of the first embodiment.

Now, the operation of the home agent is explained. Incidentally, the configuration of the same is similar to that of the first embodiment.

The operation of the home agent is different from that of the first embodiment in that home agent information is acquired from the home agent information storing server 19.

Similarly to the foregoing mobile node and access router, the home agent receives a home agent information notifying message 4450 from the home agent information storing server 19 by the process shown in the flowchart of Fig. 15B, and selects a suitable home agent (step S3404 to step S3406). Besides, the home agent information notifying section 1304 of the home agent generates a home agent information notifying message 4450 containing the information of its own address and resource and periodically sends it to the home agent information storing server 19.

Also, when the home agent information acquiring section 1306 receives a home agent information request message 4300 from the home agent information storing server 19, the home agent information notifying section 1304 sends, as a reply, a home agent information notifying message 4450 containing the information of its own resource information to the home agent information storing server 19.

Due to this, the home agent information storing server 19 is always notified of the most recent piece of information about the home agent.

Now, the home agent information storing server 19 is explained in the below.

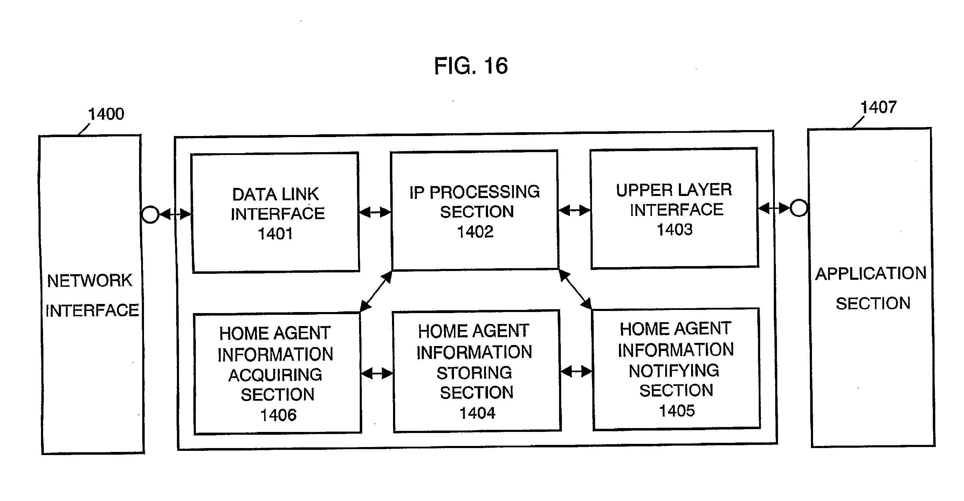

Fig. 16 is a figure showing a configuration of the home agent information storing server 19. A network interface 1400 is for connection to the IP network. A data link interface 1401 is to exchange packets with a data link layer. An IP processing section 1402 is to carry out IP processes including mobile IP. A higher layer interface 1403 is to exchange packets with a higher layer. A home agent information storing section 1404 is stored with the information of neighboring home agents. A home agent information notifying section 1405 is to notify the mobile node 10 of home agent information. A home agent information acquiring section 1406 is to acquire home agent information. An application part 1407 is to offer the service which the home agent information storing server 19 has.

Now, the operation of the home agent information storing server 19 is explained by using the flowchart shown in Fig. 15A.

When the network interface 1400 receives a home agent information request message 4300 (step S3401), the home agent information notifying section 1405 selects a suitable home agent from the home agent information management table 3500 in the home agent information storing section 1404 (step S3402).

Then, the home agent information notifying section 1405 generates a home agent information notifying message 4450 and sends it to a source of sending the home agent information request message 4300 (step S3403).

Now, described is a method for acquiring home agent information in the home agent information storing server 19. The home agent information storing section 1404 holds a home agent information management table 3500 shown in Fig. 9A. In the home agent information management table 3500, there are stored home agent addresses (3501), prefixes under management (3502), access routers (3503), and information of loads, resources and the like (3504). The home agent information management table 3500 is updated by receiving a home agent information notifying message 4450 containing the information of its own address, resource and the like manually set or sent at a regular interval from each home agent. Meanwhile, the information of each home agent in the home agent information management table 3500 can be updated by the following, i.e. the home agent information acquiring section 1406 sends a home agent information request message 4300 to a registered home agent and receives a home agent information notifying message 4450 containing own resource information and the like from the home agent. The format of home agent information request message 4300 and home agent information notifying message 4450 is similar to that of Figs. 29 and 30. In the case there is no answer in a predetermined time from a home agent, the relevant home agent can be determined not usable.

As described above, because the home agent information storing server centrally manages the information of the home agents under management over the network, it is easy for the mobile node or access router to get home agent information.

(Embodiment 3)

Embodiment 3 of the invention is different from embodiment 1 in that a home agent decides a change of the home agent depending upon a status of its own unoccupied resource.

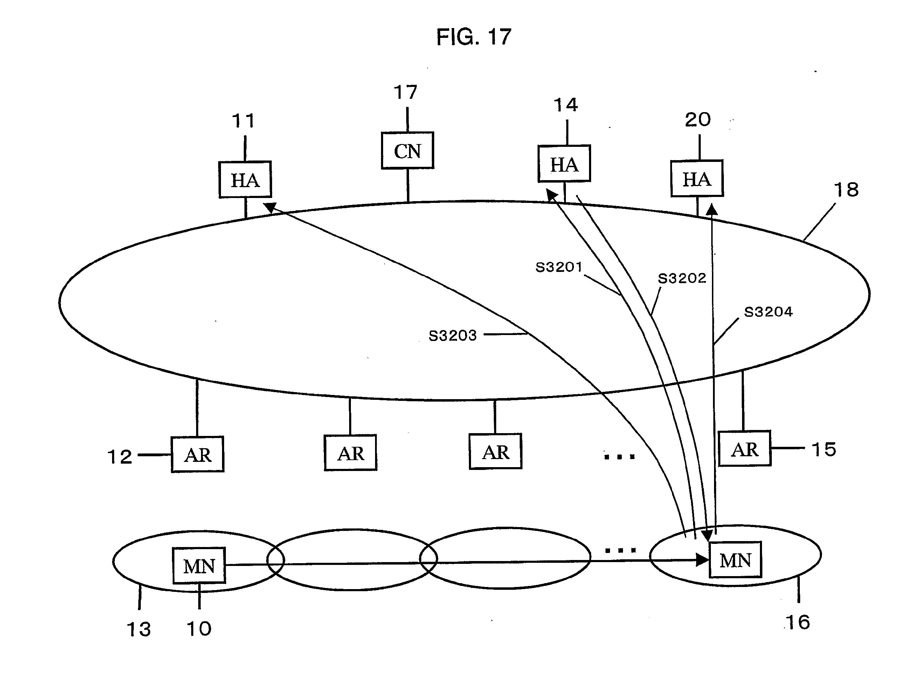

Embodiment 3 of the invention is explained by using Fig. 17. Fig. 17 is a network configuration diagram, which is different from embodiment 1 in that a home agent 20 is newly added.

In a configuration like Fig. 17, the operation is explained in the below. The mobile node 10 moves to have an access to a different access router 15 and gets a new care-of address, thereafter sending a home agent 14 a binding update message for registration (step S3201). The process up to this is similar to that of embodiment 1.

Next, the home agent 14, after receiving the binding update message 3950 (step S3201), makes sure of whether there is, in the binding cache, sufficient resource for generating a new entry to mobile node 10. In the case of resource deficiency, the home agent 14 sets a number representative of resource deficiency in the status field 4031 and sends a binding acknowledgement message 4050 describing the information of a changed-to home agent (step S3202) thereby refusing a registration of a primary care-of address. The mobile node 10, after receiving the binding acknowledgement message 4050 from the home agent (step S3202), decides one home agent as changed-to agent out of the home agents described in the message. Herein, explanation is on a case of a change from home agent 11 to home agent 20.

The mobile node 10 sends the former home agent 11 a binding update message 3950 in which the lifetime field 3922 is set at 0 (step S3203), and sends the changed-to home agent 20 a binding update message 4050 (step S3204). The former home agent 11, after receiving the binding update message 3950 (step S3204), erases the entry related to the old home address of mobile node 10.

Then, the changed-to home agent 20, after receiving the binding update message 3950 (step S3204), generates or updates an entry to mobile node 10.

Now, the detailed operation of each apparatus is explained.

The configuration of mobile node 10 is similar to that of embodiment 1.

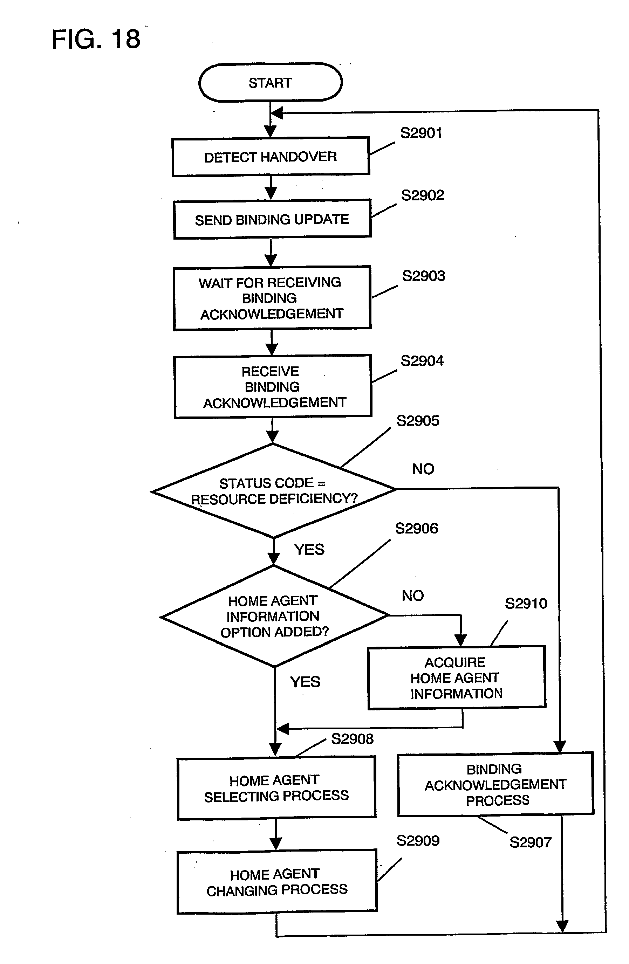

The operation of mobile node 10 is explained in the below, by using Figs. 17 and 18. Fig. 18 is a flowchart showing the operation of mobile node 10 in this embodiment.

The process of steps S2901 to S2904 is similar to that of steps S1501 to S1504 in the first embodiment.

Then, the home agent selecting section 1104 makes reference to a status field 4031 of a received binding acknowledgement message 4050 (step S2905). In the case that the value in the status field 4031 is set to a number showing a resource deficiency of home agent and the registration is refused, the home agent selecting section 1104 makes sure of whether there is added a home agent information option 4040 (step S2906).

Next, in the case that the status field 4031 is not a resource deficiency but is set to a value representative of a registration success, carried out is a binding acknowledgement process such as update of a binding update list (step S2907). Then, the process returns to the step S2901.

Then, the home agent selecting section 1104 checks whether or not the binding acknowledgement message 3950 is added with a home agent information option 4040. In the case of being added, selected is an address of one home agent from those (step S2908). The address selection by the home agent selecting section 1104 may be to randomly select one from one or more home agent addresses, or may be performed according to a priority determined taking into consideration unoccupied resources or the like of home agent. Incidentally, the priority may be represented according to a home agent address order in the home agent information option 4044 or represented according to a magnitude of values in the field added to show a priority.

The mobile node 10, after selecting a changed-to home agent, carries out a change process of home agent (step S2909). The process content is similar to that of embodiment 1.

On the other hand, in the case that there is no addition of home agent information option 4040 in step S2906, a home agent information request message 4550 is sent to the access router 15. After the home agent information acquiring section 1107 receives a home agent information notifying message 4650 from the access router 15 (step S2910), the process moves to step S2908.

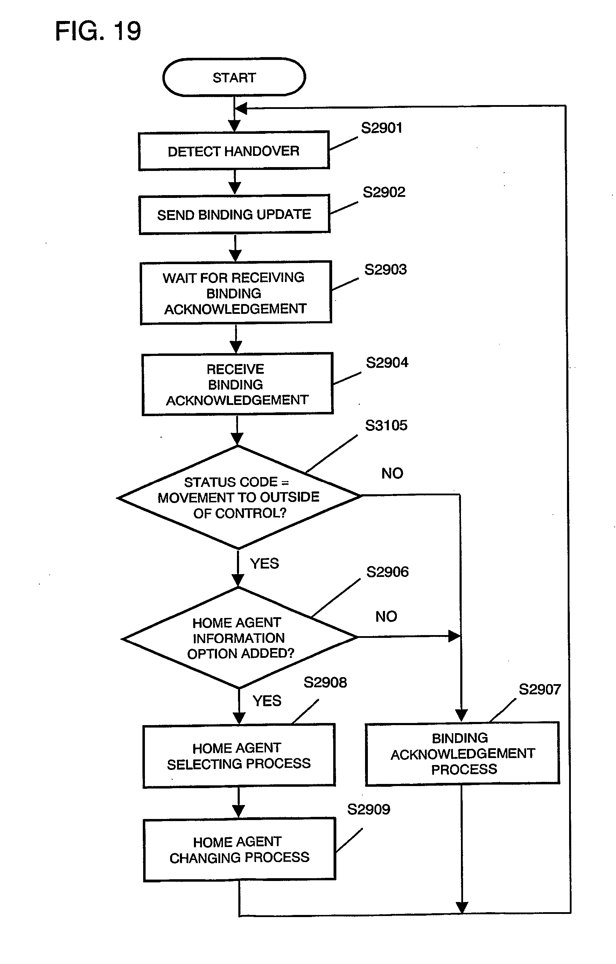

Meanwhile, a change of home agent is similarly possible on the case the mobile node 10 moves out of home agent control. Fig. 19 is a flowchart showing the operation in that case.

The steps S2901 to S2904 are similar to those of the Fig. 18 case using a determination criterion of resource deficiency. The home agent selecting section 1104, when receiving a binding acknowledgement message 4050 (step S2904), makes reference to a status code and makes sure of whether the status code shows out-of-range (step S3105). In the case of within the control range, a binding acknowledgement process is carried out. In the case of out of the control range, it is confirmed whether there is added a home agent information option 4040. From then on, operation is similar to that of the resource deficient case.

Incidentally, the mobile node 10, after receiving a candidate home agent from the home agent 14, can make a selection including the measurement result of hop number or communication delay time as shown in embodiment 1, in determining a changed-to home agent.

The access router 15 is similar to that of embodiment 1.

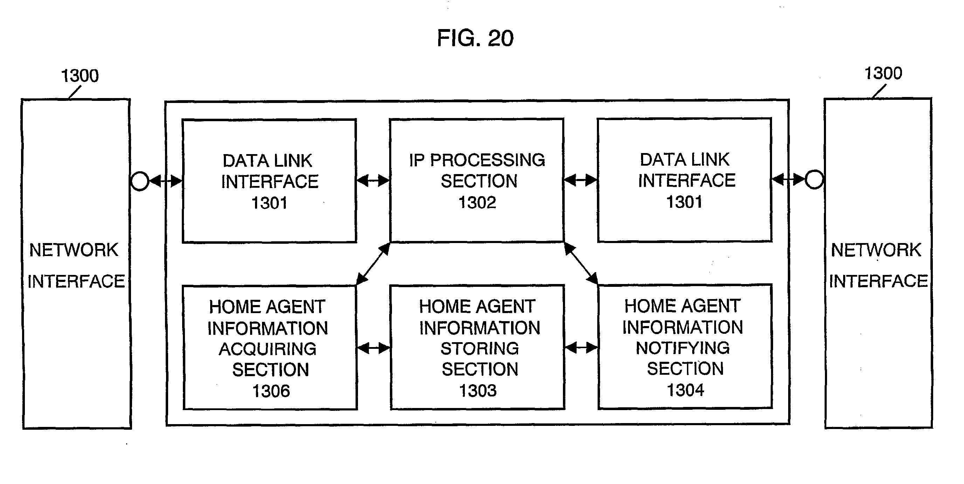

Fig. 20 is a diagram showing a configuration of home agent. This is different from that of embodiment 1 in that there is no provision of a hop-number measuring section 1305 and communication delay measuring section 1307 and in that the home agent information notifying section 1304 has a function to make sure of an unoccupied resource of binding cache.

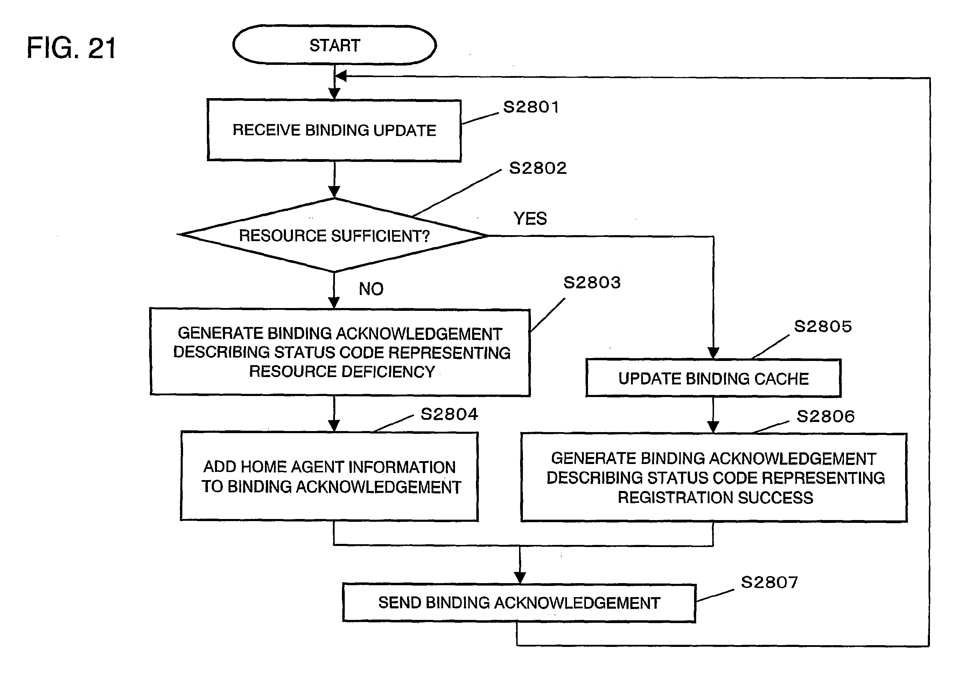

Now, the home agent operation is explained by using a flowchart shown in Fig. 21.

The communicating section 1300, when receiving a binding update message 3950 from the mobile node 10 (step S2801), makes sure of whether there are sufficient resources for the home agent information notifying section 1304 to generate a new entry to mobile node 10 in the binding cache (step S2802). Herein, resource refers to CPU load, memory remaining capacity, hard disk remaining capacity, connection network load, the number of mobile nodes accommodated on a program. Incidentally, step S2801 corresponds to Step S3201 of Fig. 17.

Next, in the case of sufficient resources, the home agent information notifying section 1304 registers the care-of address of mobile node 10 to the binding cache (step S2805).

Then, the home agent information notifying section 1304 generates a binding acknowledgement message 4050 set with a value showing a registration success in the status field 4031 (step S2806) and sends it to the mobile node 10 (step S2807). Incidentally, step S2807 corresponds to Step S3202 of Fig. 17.

On the other hand, in the case of resource deficiency, the home agent information notifying section 1034 generates a binding acknowledgement message 4050 set with a number representative of deficient resources in the status field 4031 (step S2803).

Next, the home agent information storing section 1303 holds a home agent information management table 3500 describing at least an address of another home agent and current resource information. The home agent information notifying section 1304, of the home agent 11 refusing registration, selects one or more home agents having a greater unoccupied resource than a predetermined value from the held home agent information management table 3500. The home agent information notifying section 1304 adds a home agent information option 4040 to the binding acknowledgement message 4050, and sets the selected one or more pieces of home agent information to that option (step S2804).

Incidentally, the home agent may include resource information in the router advertisement message when architecting a home agent list. Also, the home-agent list may be used as a home agent information management table 3510.

Then, the process moves to step S2807.

Meanwhile, although the operation concerning a change of home agent is similar to that of embodiment 1, the following method is applicable.

The home agent information notifying section 1304, after deciding a changed-to home agent, transfers to the changed-to home agent 14 a binding cache notifying message 4200 including an entry to mobile node 10 in the binding cache. The changed-to home agent 14 generates a new home address of mobile node 10 and sends the mobile node 10 a binding acknowledgement message 4050 containing the new address.

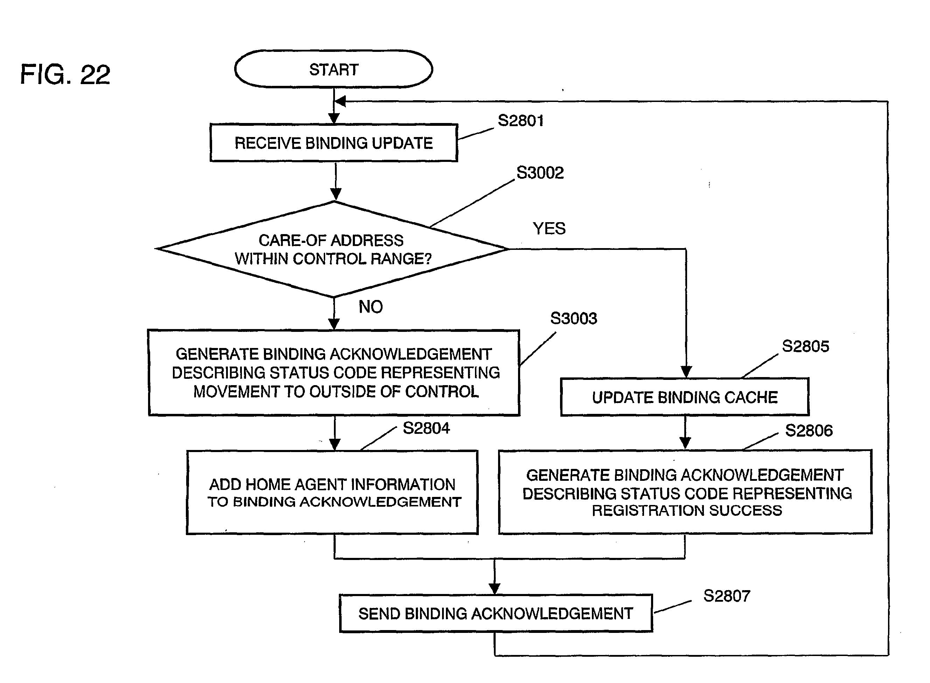

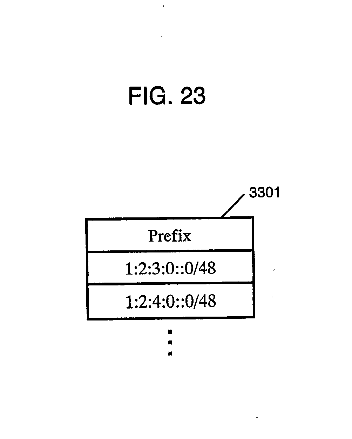

The above explained a change of home agent because of resource deficiency in the home agent. However, the home agent can similarly decide a change of home agent in the case that the care-of address shown in the binding update message 3950 received from the mobile node 10 is out of the control range. The operation in that case is explained by using a flowchart of Fig. 22. The home agent, when receiving a binding update message 3950 from the mobile node 10 (step S2801), confirms whether the care-of address matches with the prefix (3301) included in the address table shown in Fig. 23 under management of the home agent (step S3002). Incidentally, step S2801 corresponds to Step S3201 of Fig. 17.

In the case that the care-of address of mobile node 10 is out of the control range, generated is a binding acknowledgement message 4050 describing a status code representative of movement to out-of-control (step S3003).

The other operation is similar to that in the deficient resource case shown in Fig. 21.

Furthermore, registration refusal is possible depending upon a current load status of home agent in place of unoccupied resources.

Also, in the case of changing to another home agent when the home agent 11 refuses a registration because the mobile node 10 goes out of its own control range, a similar method can be used.

Incidentally, the home agent can be changed also by the method shown in Fig. 10 of embodiment 1.

As described above, when the resource is deficient or load is heavy, the home agent refuses a registration requested by a new mobile node 10. This can prevent the communication trouble due to resource deficiency or the like.

Also, because the mobile node 10 is notified of a suited home agent from the home agent, it can find an alternative home agent in a brief time.

(Embodiment 4)

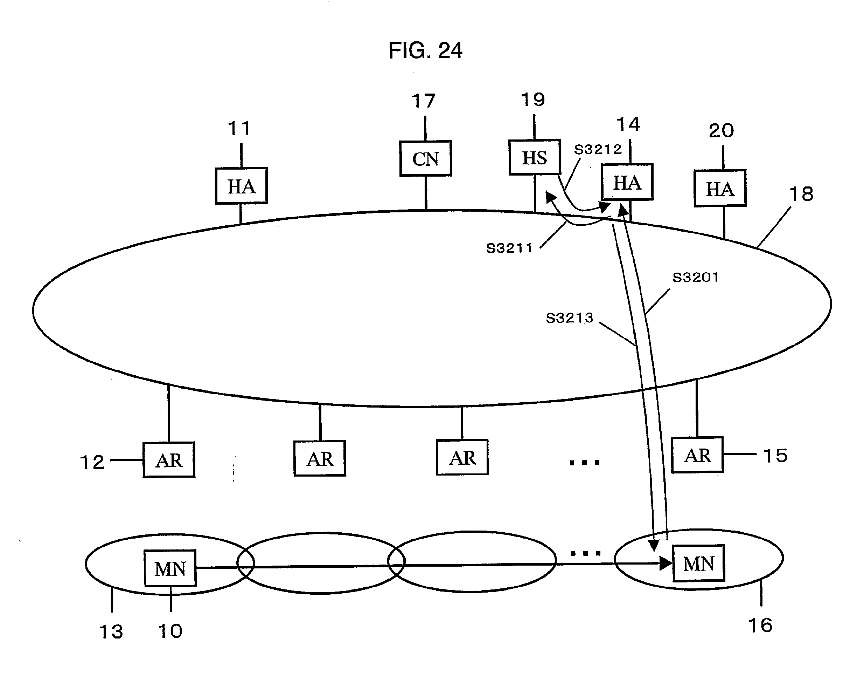

Fig. 24 is a configuration diagram of a mobile communication system in a fourth embodiment of the invention.

This is different from the mobile communication system of the third embodiment shown in Fig. 17 in that there is added a home agent information storing server 19.

The home agent information storing server 19 is stored with the information of addresses, managing prefixes, managing access routers, unoccupied resources, loads and the like of the home agents existing on a network, in a home agent information management table 3500. In the case of requested from a home agent, access router or mobile node, a suitable home agent is selected, for notification, from the home agent information management table 3500. For example, in the case that the home agent 14 is deficient in resource as shown in Fig. 24, it sends a home agent information request message 4300 3203 to the home agent information storing server 19 in order to acquire the information about another home agent having sufficient resource (step S3211).

Receiving the request, the home agent information storing server 19 selects a home agent having an unoccupied resource from the home agent information management table 3500 and sends the home agent 14 a home agent information notifying message 4450 containing the information about that home agent (step S3212). The notified home agent 14, when answering to the mobile node 10 registration-requesting for a registration-refused binding acknowledgement message 4050, sends the information of an alternative home agent added to the home agent information option 4040 (step S3213).

Next, concerning the operation of each apparatus, the mobile nodes 10 and the access routers 15 are similar to those of embodiment 3. The home agent storing server 19 is similar to that of embodiment 2.

Although the configuration of home agent is similar to that of embodiment 3, there is difference from embodiment 3 in that, in the case that unoccupied resource is deficient when receiving a registration request from the mobile node 10 (step S3201), the home agent information acquiring section 1306 goes, for inquiry, to the home agent information storing server 19.

The operation in this case is explained by using a flowchart of Figs. 24 and 15B.

First, the home agent information acquiring section 1306 generates a home agent information request message 4300 and sends it to the home agent information storing server 19 (step S3404). Incidentally, step S3404 corresponds to Step S3211 of Fig. 24.

Then, the home agent information acquiring section 1306 receives a home agent information notifying message 4450 from the home agent information storing server 19 (step S3405) thereby acquiring the information about home agent. Incidentally, step S3405 corresponds to Step S3212 of Fig. 24.

This allows for the home agent to readily know an alternative home agent, enabling the mobile node 10 to find an alternative home agent in a brief time.

Incidentally, in the present embodiment, although the home agent made an inquiry to the home agent information storing server 19, the invention is not limited to this. The mobile node 10 itself may send a home agent information request message 4300 to the home agent information storing server 19 so that it can similarly receive a home agent information notifying message 4450 and select one home agent address therefrom.

INDUSTRIAL APPLICABILITY

As described above, the present invention is useful for the mobile communications supported with IP version 6, and suited for communications with another communication node when the mobile node is connected with ones other than the home link.

**Claims**

1. A mobile node (10) **characterized by** comprising:

   a measuring section (1106, 1108; 2508) for measuring at least one of a hop number and communication delay time to a home agent, and for generating a measurement value;
   a home agent information acquiring section (1107) for acquiring information about a home agent as a subject of measurement of the measuring section; and
   a home agent selecting section (1104) for selecting one of a plurality of home agents as being the belonging home agent to which the mobile terminal belongs, the home agent selecting section being configured to select, when the measurement value to the belonging home agent becomes equal to or greater than a first predetermined value, another of said home agents as the belonging agent to thereby change the belonging home agent, by using the information acquired by the acquiring section, the new home agent having a measurement value equal to or less than a second predetermined value.

2. A mobile node according to claim 1, wherein, in a case that the mobile node is in real-time communication with another node, the measuring section (1108) is operable to measure a communication delay time to the home agent to change, when a communication delay to the belonging home agent becomes equal to or greater than a third predetermined value, the belonging home agent by one having a communication delay equal to or smaller than a fourth predetermined value;
   and in the case of not so, the measuring section (1108) is operable to measure a hop number to the home agent to change, when a hop number to the belonging home agent becomes equal to or greater than a first predetermined value, the belonging home agent by one having a hop number equal to or smaller than a second predetermined value.

3. A mobile node according to claims 1, wherein the measuring section (1106) is operable to determine the hop number by computing a difference between an initial value of a hop limit field in a header of a packet of IP version 6 sent from the home agent and a value of the hop limit field received.

4. A mobile node according to claims 2, wherein the measuring section (1106) is operable to determine the hop number by computing a difference between an initial value of a hop limit field in a header of a packet of IP version 6 sent from the home agent and a value of the hop limit field received.

5. A mobile node according to claims 1, wherein the measuring section (1108) is operable to determine the communication delay time by measuring a time of from sending the home agent an ICMP echo request packet to receiving an ICMP echo reply packet from the home agent.

6. A mobile node according to claims 2, wherein the measuring section (1108) is operable to determine the communication delay time by measuring a time of from sending the home agent an ICMP echo request packet to receiving an ICMP echo reply packet from the home agent.

7. A mobile node according to claim 1, wherein the measuring section (1108) is operable to increase a measuring frequency of communication delay time when the moving speed of the mobile node is high, and to decrease the measuring frequency when the moving speed is low.

8. A mobile node according to claim 3, wherein the measuring section is operable to send an ICMP echo request packet when the number of times of connection changes to the access router becomes an integer times a fifth predetermined value.

9. A communication system comprising:

a mobile node (10) according to claim 1, and
a home agent information storing server (19);
wherein the home agent information acquiring section (1107) is operable to get the home agent information from the home agent information storing server, and
the home agent information storing server (19) comprises:

a home agent information storing section (1404) for holding home agent information including an address or a managing home agent; and
a home agent information notifying section (1405) for notifying any one of a mobile node, access router and home agent in connection to a network of the home agent information selected from the home agent information storing section;
wherein the home agent information storing section further holds any one piece of information of current unoccupied resource and load of the managing home agent.

10. A communication system comprising:

a mobile node (10) according to claim 1, and
a home agent;
wherein the home agent information acquiring section is operable to get information about a home agent notified from the home agent, and
the home agent comprising:

a home agent information notifying section for answering a registration refusal in a case that, when receiving a registration request from a mobile node, the home agent is deficient in unoccupied resource; and
a home agent information storing section for storing home agent information including an address and current resource information of another home agent;
wherein the home agent information notifying section answers the registration refusal and selects a home agent suited for a predetermined condition from the home agent information storing section to thereby answer home agent information of the selected home agent.

11. A communication system according to claim 10, wherein the home agent selecting section is operable to select, preferentially, a home agent satisfying at least any of conditions of greatest unoccupied resource, minimum load, least hop number and shortest communication delay time.

12. A method for mobile communications **characterized by** comprising:

a step of measuring (S2606, S2606; S2705) at least any one of a hop number and communication delay time to a belonging home agent by a mobile node;
a step of the mobile node requesting a belonging home agent to delete registration and a new home agent to make registration, when a result of measurement becomes equal to or greater than a predetermined value;
a step of deleting a registration of the mobile node by the belonging home agent; and
a step of registering the mobile node by the new home agent.

13. A method for mobile communications according to claim 12, wherein as the new home agent is selected preferentially a home agent satisfying at least any of conditions of greatest unoccupied resource, minimum load, least hop number and shortest communication delay time.

14. A method for mobile communications according to claim 13, wherein the new home agent is notified from a home agent information managing server for managing information about home agents to the mobile node.

**Patentansprüche**

1. Mobiler Knoten (10), **dadurch gekennzeichnet, dass** er umfasst:

   einen Messabschnitt (1106, 1108; 2508) zum Messen mindestens einer von einer Sprunganzahl und einer Kommunikationsverzögerungszeit zu einem Heimatagenten und zum Erzeugen eines Messwerts;
   einen Heimatagenteninformations-Einholabschnitt (1107) zum Einholen von Informationen über einen Heimatagenten als ein Messobjekt des Messabschnitts; und
   einen Heimatagenten-Auswahlabschnitt (1104) zum Auswählen eines von einer Mehrzahl von Heimatagenten als den zugehörigen Heimatagenten, zu dem das mobile Endgerät gehört, wobei der Heimatagenten-Auswahlabschnitt so konfiguriert ist, dass er, wenn der Messwert für den zugehörigen Heimatagenten gleich wie oder größer als ein erster vorbestimmter Wert wird, durch Verwenden der durch den Einholabschnitt eingeholten Informationen einen anderen der Heimatagenten als den zugehörigen Heimatagenten auswählt, um dadurch den zugehörigen Heimatagenten zu ersetzen, wobei der neue Heimatagent einen Messwert aufweist, der gleich wie oder niedriger als ein zweiter vorbestimmter Wert ist.

2. Mobiler Knoten nach Anspruch 1, wobei der Messabschnitt (1108) in einem Fall, in dem der mobile Knoten in Echtzeitkommunikation mit einem anderen Knoten ist, so betrieben werden kann, dass er eine Kommunikationsverzögerungszeit zum Heimatagenten misst, um, wenn eine Kommunikationsverzögerung zum zugehörigen Heimatagenten gleich wie oder größer als ein dritter vorbestimmter Wert wird, den zugehörigen Heimatagenten durch einen mit einer Kommunikationsverzögerung zu ersetzen, die gleich wie oder niedriger als ein vierter vorbestimmter Wert ist;
   und der Messabschnitt (1108) in dem Fall, in dem dies nicht so ist, so betrieben werden kann, dass er eine Sprunganzahl zum Heimatagenten misst, um, wenn eine Sprunganzahl zum zugehörigen Heimatagenten gleich wie oder größer als ein erster vorbestimmter Wert wird, den zugehörigen Heimatagenten durch einen mit einer Sprunganzahl zu ersetzen, die gleich wie oder kleiner als ein zweiter vorbestimmter Wert ist.

3. Mobiler Knoten nach Anspruch 1, wobei der Messabschnitt (1106) so betrieben werden kann, dass er die Sprunganzahl durch Berechnen einer Differenz zwischen einem Anfangswert eines Sprunggrenze-Feldes in einem Kopf eines Pakets der IP-Version 6, das vom Heimatagenten gesendet wird, und einem Wert des empfangenen Sprunggrenze-Feldes berechnet.

4. Mobiler Knoten nach Anspruch 2, wobei der Messabschnitt (1106) so betrieben werden kann, dass er die Sprunganzahl durch Berechnen einer Differenz zwischen einem Anfangswert eines Sprunggrenze-Feldes in einem Kopf eines Pakets der IP-Version 6, das vom Heimatagenten gesendet wird, und einem Wert des empfangenen Sprunggrenze-Feldes berechnet.

5. Mobiler Knoten nach Anspruch 1, wobei der Messabschnitt (1108) so betrieben werden kann, dass er die Kommunikationsverzögerungszeit durch Messen einer Zeit vom Senden des Heimatagenten eines ICMP-Echo-Anforderungspakets bis zum Empfangen eines ICMP-Echo-Antwortpakets vom Heimatagenten bestimmt.

6. Mobiler Knoten nach Anspruch 2, wobei der Messabschnitt (1108) so betrieben werden kann, dass er die Kommunikationsverzögerungszeit durch Messen einer Zeit vom Senden des Heimatagenten einer ICMP-Echo-Anforderungspakets bis zum Empfangen eines ICMP-Echo-Antwortpakets vom Heimatagenten bestimmt.

7. Mobiler Knoten nach Anspruch 1, wobei der Messabschnitt (1108) so betrieben werden kann, dass er eine Messhäufigkeit von Kommunikationsverzögerungszeit erhöht, wenn die Bewegungsgeschwindigkeit des mobilen Knotens hoch ist, und die Messhäufigkeit verringert, wenn die Bewegungsgeschwindigkeit niedrig ist.

8. Mobiler Knoten nach Anspruch 3, wobei der Messabschnitt so betrieben werden kann, dass er ein ICMP-Echo-Anforderungspaket sendet, wenn die Anzahl von Malen von Verbindungsänderungen zum Zugangsrouter eine ganze Zahl mal einem fünften vorbestimmten Wert wird.

9. Kommunikationssystem, umfassend:

einen mobilen Knoten (10) nach Anspruch 1, und
einen Heimatagenteninformations-Speicherserver (19);
wobei der Heimatagenteninformations-Einholabschnitt (1107) so betrieben werden kann, dass er Heimatagenteninformationen vom Heimatagenteninformations-Speicherserver einholt, und
der Heimatagenteninformations-Speicherserver (19) umfasst:

einen Heimatagenteninformations-Speicherabschnitt (1404) zum Speichern von Heimatagenteninformationen, die eine Adresse eines verwaltenden Heimatagenten umfassen; und
einen Heimatagenteninformations-Mitteilungsabschnitt (1405) zum Mitteilen der aus dem Heimatagenteninformations-Speicherabschnitt ausgewählten Heimatagenteninformationen an einen von einem mobilen Knoten, einem Zugangsrouter und einem Heimatagenten in Verbindung mit einem Netz;
wobei der Heimatagenteninformations-Speicherabschnitt ferner ein Element von Information von aktuellem unbelegtem Betriebsmittel und Last des verwaltenden Heimatagenten speichert.

10. Kommunikationssystem, umfassend:

einen mobilen Knoten (10) nach Anspruch 1, und
einen Heimatagenten;
wobei der Heimatagenteninformations-Einholabschnitt so betrieben werden kann, dass er Informationen über einen Heimatagenten einholt, die vom Heimatagenten mitgeteilt werden, und
der Heimatagent umfasst:

einen Heimatagenteninformations-Mitteilungsabschnitt zum Beantworten einer Registrierungszurückweisung in einem Fall, in dem es dem Heimatagenten bei Empfang einer Registrierungsanforderung von einem mobilen Knoten an unbelegtem Betriebsmittel mangelt; und
einen Heimatagenteninformations-Speicherabschnitt zum Speichern von Heimatagenteninformationen, die eine Adresse und aktuelle Betriebsmittelinformationen eines anderen Heimatagenten umfassen;
wobei der Heimatagenteninformations-Mitteilungsabschnitt die Registrierungszurückweisung beantwortet und einen Heimatagenten auswählt, der für eine vorbestimmte Bedingung aus dem Heimatagenteninformations-Speicherabschnitt geeignet ist, um dadurch Heimatagenteninformationen des ausgewählten Heimatagenten zu beantworten.

11. Kommunikationssystem nach Anspruch 10, wobei der Heimatagenten-Auswahlabschnitt so betrieben werden kann, dass er vorzugsweise einen Heimatagenten auswählt, der mindestens welche von Bedingungen von größtem unbelegtem Betriebsmittel, Mindestlast, niedrigster Sprunganzahl und kürzester Kommunikationsverzögerungszeit erfüllt.

12. Verfahren für Mobilkommunikationen, **dadurch gekennzeichnet, dass** es umfasst:

einen Schritt des Messens (S2606, S2606; S2705) mindestens einer von einer Sprunganzahl und einer Kommunikationsverzögerungszeit zu einem zugehörigen Heimatagenten durch einen mobilen Knoten;
einen Schritt durch den mobilen Knoten des Aufforderns eines zugehörigen Heimatagenten, Registrierung zu löschen, und eines neuen Heimatagenten, Registrierung vorzunehmen, wenn ein Messergebnis gleich wie oder größer als ein vorbestimmter Wert wird;
einen Schritt des Löschens einer Registrierung des mobilen Knotens durch den zugehörigen Heimatagenten; und
einen Schritt des Registrierens des mobilen Knotens durch den neuen Heimatagenten.

13. Verfahren für Mobilkommunikationen nach Anspruch 12, wobei als der neue Heimatagent vorzugsweise ein Heimatagent ausgewählt wird, der mindestens welche von Bedingungen von größtem unbelegtem Betriebsmittel, Mindestlast, niedrigster Sprunganzahl und kürzester Kommunikationsverzögerungszeit erfüllt.

14. Verfahren für Mobilkommunikationen nach Anspruch 13, wobei der neue Heimatagent von einem Heimatagenteninformations-Verwaltungsserver zum Verwalten von Informationen über Heimatagenten dem mobilen Knoten mitgeteilt wird.

**Revendications**

1. Noeud mobile (10) **caractérisé en ce qu**'il comprend

   une section de mesure (1106, 1108 ; 2508) permettant de mesurer au moins l'un(e) parmi un nombre de bonds et une durée de retard de communication pour un agent de rattachement, et de générer une valeur de mesure ; une section d'acquisition d'informations (1107) d'agent de rattachement permettant d'acquérir des informations concernant un agent de rattachement en tant que sujet de mesure de la section de mesure ; et une section de sélection (1104) d'agent de rattachement permettant de sélectionner l'un parmi une pluralité d'agents de rattachement comme étant l'agent de rattachement attitré auquel appartient le terminal mobile, la section de sélection d'agent de rattachement étant configurée pour sélectionner, lorsque la valeur de mesure de l'agent de rattachement attitré devient supérieure ou égale à une première valeur prédéterminée, un autre agent parmi lesdits agents de rattachement comme étant l'agent attiré pour changer ainsi l'agent de rattachement attitré, en utilisant les informations acquises par la section d'acquisition, le nouvel agent de rattachement ayant une valeur de mesure inférieure ou égale à une deuxième valeur prédéterminée.

2. Noeud mobile selon la revendication 1, dans lequel, dans un cas où le noeud mobile est dans une communication en temps réel avec un autre noeud, la section de mesure (1108) peut fonctionner pour mesurer une durée de retard de communication pour l'agent de rattachement pour changer, lorsqu'un retard de communication pour l'agent de rattachement attitré devient supérieur ou égal à une troisième valeur prédéterminée, l'agent de rattachement attitré par un autre ayant un retard de communication inférieur ou égal à une quatrième valeur prédéterminée ; et dans le cas contraire, la section de mesure (1108) peut fonctionner pour mesurer un nombre de bonds pour l'agent de rattachement pour changer, lorsqu'un nombre de bonds pour l'agent de rattachement attitré devient supérieur ou égal à une première valeur prédéterminée, l'agent de rattachement attitré par un autre ayant un nombre de bonds inférieur ou égal à une deuxième valeur prédéterminée.

3. Noeud mobile selon la revendication 1, dans lequel la section de mesure (1106) peut fonctionner pour déterminer le nombre de bonds en calculant une différence entre une valeur initiale d'un champ de limite de bonds dans une en-tête d'un paquet IP de version 6 envoyée depuis l'agent de rattachement et une valeur du champ de limite de bonds reçue.

4. Noeud mobile selon la revendication 2, dans lequel la section de mesure (1106) peut fonctionner pour déterminer le nombre de bonds en calculant une différence entre une valeur initiale d'un champ de limite de bonds dans une en-tête d'un paquet IP de version 6 envoyée depuis l'agent de rattachement et une valeur du champ de limite de bonds reçue.

5. Noeud mobile selon la revendication 1, dans lequel la section de mesure (1108) peut fonctionner pour déterminer la durée de retard de communication en mesurant une durée séparant l'envoi d'un paquet de demande d'écho ICMP par l'agent de rattachement et la réception d'un paquet de réponse d'écho ICMP en provenance de l'agent de rattachement.

6. Noeud mobile selon la revendication 2, dans lequel la section de mesure (1108) peut fonctionner pour déterminer la durée de retard de communication en mesurant une durée séparant l'envoi d'un paquet de demande d'écho ICMP par l'agent de rattachement et la réception d'un paquet de réponse d'écho ICMP en provenance de l'agent de rattachement.

7. Noeud mobile selon la revendication 1, dans lequel la section de mesure (1108) peut fonctionner pour augmenter une fréquence de mesure de durée de retard de communication lorsque la vitesse de déplacement du noeud mobile est élevée, et pour diminuer la fréquence de mesure lorsque la vitesse de déplacement est faible.

8. Noeud mobile selon la revendication 3, dans lequel la section de mesure peut fonctionner pour envoyer un paquet de demande d'écho ICMP lorsque le nombre de fois de changements de connexion au routeur d'accès devient un nombre entier de fois une cinquième valeur prédéterminée.

9. Système de communication comprenant :

   un noeud mobile (10) selon la revendication 1, et
   un serveur de stockage d'informations d'agent de rattachement (19) ;

dans lequel la section d'acquisition d'informations (1107) d'agent de rattachement peut fonctionner pour obtenir les informations d'agent de rattachement depuis le serveur de stockage d'informations d'agent de rattachement, et

le serveur de stockage d'informations d'agent de rattachement (19) comprend :

une section de stockage d'informations (1404) d'agent de rattachement permettant de maintenir des informations d'agent de rattachement comportant une adresse d'un agent de rattachement de gestion ; et
une section de notification d'informations (1405) d'agent de rattachement permettant de notifier l'un quelconque parmi un noeud mobile, un routeur d'accès et un agent de rattachement connecté à un réseau des informations d'agent de rattachement sélectionnées à partir de la section de stockage d'informations d'agent de rattachement ;
dans lequel la section de stockage d'informations d'agent de rattachement maintient en outre un élément d'informations quelconque d'une ressource inoccupée actuelle et d'une charge de l'agent de rattachement de gestion.

10. Système de communication comprenant :

un noeud mobile (10) selon la revendication 1, et
un agent de rattachement ;
dans lequel la section d'acquisition d'informations d'agent de rattachement peut fonctionner pour obtenir des informations concernant un agent de rattachement notifiées par l'agent de rattachement, et
l'agent de rattachement comprenant :

une section de notification d'informations d'agent de rattachement permettant de répondre à un refus d'enregistrement dans le cas où, lors de la réception d'une requête d'enregistrement provenant d'un noeud mobile, l'agent de rattachement est déficient en ressource inoccupée ; et
une section de stockage d'informations d'agent de rattachement permettant de stocker des informations d'agent de rattachement comportant une adresse et des informations de ressource actuelle d'un autre agent de rattachement ;
dans lequel la section de notification d'informations d'agent de rattachement répond au refus d'enregistrement et sélectionne un agent de rattachement approprié pour une condition prédéterminée à partir de la section de stockage d'informations d'agent de rattachement pour répondre ainsi à des informations d'agent de rattachement de l'agent de rattachement sélectionné.

11. Système de communication selon la revendication 10, dans lequel la section de sélection d'agent de rattachement peut fonctionner pour sélectionner, de préférence, un agent de rattachement satisfaisant au moins l'une des conditions suivantes : la plus grande ressource inoccupée, une charge minimale, le plus petit nombre de bonds et la plus courte durée de retard de communication.

12. Procédé de communications mobiles, **caractérisé en ce qu'**il comprend :

une étape de mesure (S2606, S2606 ; S2705) d'au moins l'un(e) quelconque parmi un nombre de bonds et une durée de retard de communication pour un agent de rattachement attitré par un noeud mobile ;
une étape selon laquelle un noeud mobile demande à un agent de rattachement attitré d'effacer l'enregistrement et demande à un nouvel agent de rattachement d'effectuer l'enregistrement, lorsqu'un résultat de mesure devient supérieur ou égal à une valeur prédéterminée ;
une étape consistant à effacer un enregistrement du noeud mobile par l'agent de rattachement attitré ; et
une étape consistant à enregistrer le nouveau noeud mobile par le nouvel agent de rattachement.

13. Procédé de communications mobiles selon la revendication 12, dans lequel le nouvel agent de rattachement est sélectionné de préférence comme agent de rattachement satisfaisant au moins l'une des conditions suivantes : la plus grande ressource inoccupée, une charge minimale, le plus petit nombre de bonds et la plus courte durée de retard de communication.

14. Procédé de communications mobiles selon la revendication 13, dans lequel le nouvel agent de rattachement est notifié à partir d'un serveur de gestion d'informations d'agent de rattachement pour gérer des informations concernant des agents de rattachement pour le noeud mobile.

FIG. 1

EP 1 495 614 B1

FIG. 2

## FIG. 3

COMMUNICATING SECTION — 1100

Internal sections:
- DATA LINK INTERFACE 1101
- IP PROCESSING SECTION 1102
- UPPER LAYER INTERFACE 1103
- HOP NUMBER MEASURING SECTION 1106
- HOME AGENT SELECTING SECTION 1104
- COMMUNICATION DELAY TIME MEASURING SECTION 1108
- HOME AGENT INFORMATION ACQUIRING SECTION 1107
- HOME AGENT INFORMATION STORING SECTION 1105

APPLICATION SECTION — 1110

EP 1 495 614 B1

EP 1 495 614 B1

FIG. 4

```
              ┌──────────────┐
              │    START     │
              └──────┬───────┘
                     │
                     ▼
         ┌────────────────────────┐
         │   DETECT HANDOVER      │────── S1501
         └───────────┬────────────┘
                     │
                     ▼
         ┌────────────────────────┐
         │   SEND BINDING UPDATE  │────── S1502
         └───────────┬────────────┘
                     │
                     ▼
         ┌────────────────────────┐
         │   WAIT FOR RECEIVING   │────── S1503
         │ BINDING ACKNOWLEDGEMENT│
         └───────────┬────────────┘
                     │
                     ▼
         ┌────────────────────────┐
         │        RECEIVE         │────── S1504
         │ BINDING ACKNOWLEDGEMENT│
         └───────────┬────────────┘
                     │
                     ▼                          S1505
              ◇─────────────◇   NO
         ◇   CHANGE FLAG = ON   ◇──────────────────┐
              ◇─────────────◇                      │
                     │ YES                         │
                     ▼         S1506               ▼         S1508
         ┌────────────────────────┐    ┌────────────────────────┐
         │      HOME AGENT        │    │ BINDING ACKNOWLEDGEMENT │
         │    SELECT PROCESS      │    │        PROCESS          │
         └───────────┬────────────┘    └───────────┬────────────┘
                     │         S1507               │
                     ▼                             │
         ┌────────────────────────┐                │
         │      HOME AGENT        │                │
         │    CHANGE PROCESS      │                │
         └───────────┬────────────┘                │
```

FIG. 5

START

DETECT HANDOVER — S2601

SEND BINDING UPDATE — S2602

WAIT FOR RECEIVING BINDING ACKNOWLEDGEMENT — S2603

RECEIVE BINDING ACKNOWLEDGEMENT — S2604

HOP NUMBER MEASURING PROCESS — S2605

COMMUNICATION DELAY TIME MEASURING PROCESS — S2606

S2607

(HOP NUMBER, COMMUNICATION DELAY TIME) > PREDETERMINED NUMBER 3

NO

YES

S2608

HOME AGENT SELECTING PROCESS

S2610

BINDING ACKNOWLEDGEMENT PROCESS

S2609

HOME AGENT CHANGING PROCESS

## FIG. 6

1100

1110

COMMUNICATING SECTION

DATA LINK INTERFACE 1101

IP PROCESSING SECTION 1102

UPPER LAYER INTERFACE 1103

HOME AGENT SELECTING SECTION 1104

HOP-NUMBER/ COMMUNICATION- DELAY-TIME MEASURING SECTION 2508

HOME AGENT INFORMATION ACQUIRING SECTION 1107

HOME AGENT INFORMATION STORING SECTION 1105

APPLICATION SECTION

EP 1 495 614 B1

**FIG. 7**

START

DETECT HANDOVER — S2601

SEND BINDING UPDATE — S2602

WAIT FOR RECEIVING BINDING ACKNOWLEDGEMENT — S2603

RECEIVE BINDING ACKNOWLEDGEMENT — S2604

HOP NUMBER, COMMUNICATION DELAY TIME MEASURING PROCESS — S2705

S2607

(HOP NUMBER, COMMUNICATION DELAY TIME) > PREDETERMINED NUMBER 3

NO

YES

HOME AGENT SELECTING PROCESS — S2608

BINDING ACKNOWLEDGEMENT PROCESS — S2610

HOME AGENT CHANGING PROCESS — S2609

FIG. 8

**FIG. 9A**

| Home Agent (3501) | Prefixes (3502) | Access Routers (3503) | Information (3504) |
|---|---|---|---|
| 1:2:2:3:4:5:6:7 | 1:2:3:0::0/48 | AR1~16 | Load = High |
|  | 1:2:4:0::0/48 | AR17~32 | Resource = OK |
| 1:2:5:6:7:8:9:1 | 1:2:5:0::0/48 | AR33~38 | Resource = Empty |
| ... | ... | ... | ... |

(3500)

**FIG. 9B**

| Home Agent (3501) | Information (3504) | Hop (3505) | Delay (3507) |
|---|---|---|---|
| 1:2:2:3:4:5:6:7 | Load = High Resource = OK | 13 | 100msec |
| 1:2:5:6:7:8:9:1 | Resource = Empty | 12 | 90msec |
| ... | ... | ... | ... |

(3510)

30

FIG. 10

FIG. 11

START

RECEIVE BINDING UPDATE — S1601

HOP NUMBER MEASURING PROCESS — S1602

COMMUNICATION DELAY TIME MEASURING PROCESS — S1603

(HOP NUMBER, COMMUNICATION DELAY TIME) > PREDETERMINED VALUE 1 — S1604

NO

YES — S1605

SEND BINDING ACKNOWLEDGEMENT (CHANGE INSTRUCTION FLAG = ON)

UPDATE BINDING CACHE — S1606

SEND BINDING ACKNOWLEDGEMENT (CHANGE INSTRUCTION FLAG = OFF) — S1607

# FIG. 12

FIG. 13

EP 1 495 614 B1

FIG. 14

## FIG. 15A

```
        ┌─────────────┐
        │    START    │
        └──────┬──────┘
               │ ◄──────────────────────┐
               ▼                         │
   ┌───────────────────────┐ S3401       │
   │    RECEIVE HOME AGENT  │            │
   │  INFORMATION REQUEST   │            │
   │        MESSAGE         │            │
   └───────────┬───────────┘            │
               ▼                         │
   ┌───────────────────────┐ S3402       │
   │ SELECT SUITABLE HOME   │            │
   │ AGENT FROM HOME AGENT  │            │
   │ INFORMATION MANAGEMENT │            │
   │         TABLE          │            │
   └───────────┬───────────┘            │
               ▼                         │
   ┌───────────────────────┐ S3403       │
   │ GENERATE/SEND HOME     │────────────┘
   │ AGENT INFORMATION      │
   │ NOTIFYING MESSAGE      │
   └───────────────────────┘
```

## FIG. 15B

```
        ┌─────────────┐
        │    START    │
        └──────┬──────┘
               ▼
   ┌───────────────────────┐ S3404
   │ GENERATE/SEND HOME     │
   │ AGENT INFORMATION      │
   │ REQUEST MESSAGE        │
   └───────────┬───────────┘
               ▼
   ┌───────────────────────┐ S3405
   │    RECEIVE HOME AGENT  │
   │ INFORMATION NOTIFYING  │
   │        MESSAGE         │
   └───────────┬───────────┘
               ▼
   ┌───────────────────────┐ S3406
   │   SELECT HOME AGENT    │
   └───────────┬───────────┘
               ▼
        ┌─────────────┐
        │     END     │
        └─────────────┘
```

EP 1 495 614 B1

## FIG. 16

1400

1407

NETWORK INTERFACE

DATA LINK INTERFACE 1401

IP PROCESSING SECTION 1402

UPPER LAYER INTERFACE 1403

HOME AGENT INFORMATION ACQUIRING SECTION 1406

HOME AGENT INFORMATION STORING SECTION 1404

HOME AGENT INFORMATION NOTIFYING SECTION 1405

APPLICATION SECTION

EP 1 495 614 B1

# FIG. 17

# FIG. 18

```
                    START

                      │
                      ▼
          ┌─────────────────────┐   S2901
          │   DETECT HANDOVER   │
          └─────────────────────┘
                      │
                      ▼
          ┌─────────────────────┐   S2902
          │ SEND BINDING UPDATE │
          └─────────────────────┘
                      │
                      ▼
          ┌─────────────────────┐   S2903
          │  WAIT FOR RECEIVING │
          │       BINDING       │
          │   ACKNOWLEDGEMENT   │
          └─────────────────────┘
                      │
                      ▼
          ┌─────────────────────┐   S2904
          │       RECEIVE       │
          │       BINDING       │
          │   ACKNOWLEDGEMENT   │
          └─────────────────────┘
                      │
                      ▼          S2905
              ╱───────────────╲              NO
             ╱  STATUS CODE =  ╲──────────────────┐
             ╲ RESOURCE DEFICIENCY? ╱             │
              ╲───────────────╱                   │
                      │                           │
                      │ YES         S2906         │
                      ▼                           │
              ╱───────────────╲      NO           │
             ╱   HOME AGENT    ╲─────────┐  S2910 │
             ╲  INFORMATION    ╱         │        │
             ╲ OPTION ADDED?  ╱          ▼        │
              ╲───────────────╱   ┌──────────────┐│
                      │           │   ACQUIRE    ││
                      │ YES       │  HOME AGENT  ││
                      │           │ INFORMATION  ││
                      │           └──────────────┘│
                      │    S2908       │          │
                      ▼◄───────────────┘          │
          ┌─────────────────────┐   ┌─────────────────────┐
          │     HOME AGENT      │   │      BINDING        │
          │  SELECTING PROCESS  │   │  ACKNOWLEDGEMENT    │
          └─────────────────────┘   │      PROCESS        │
                      │             └─────────────────────┘
                      ▼   S2909              S2907
          ┌─────────────────────┐
          │     HOME AGENT      │
          │  CHANGING PROCESS   │
          └─────────────────────┘
```

# FIG. 19

```
                    ┌──────────────┐
                    │    START     │
                    └──────┬───────┘
                           │
                           ▼
              ┌─────────────────────────┐  S2901
              │     DETECT HANDOVER     │
              └───────────┬─────────────┘
                          │
                          ▼
              ┌─────────────────────────┐  S2902
              │   SEND BINDING UPDATE   │
              └───────────┬─────────────┘
                          │
                          ▼
              ┌─────────────────────────┐  S2903
              │    WAIT FOR RECEIVING   │
              │         BINDING         │
              │    ACKNOWLEDGEMENT      │
              └───────────┬─────────────┘
                          │
                          ▼
              ┌─────────────────────────┐  S2904
              │        RECEIVE          │
              │        BINDING          │
              │    ACKNOWLEDGEMENT      │
              └───────────┬─────────────┘
                          │                    S3105
                          ▼
                    ╱──────────╲               NO
                   ╱ STATUS CODE=╲
                  ╱ MOVEMENT TO   ╲──────────────────┐
                  ╲ OUTSIDE OF    ╱                   │
                   ╲  CONTROL?   ╱                    │
                    ╲──────────╱                      │
                        │ YES                         │
                        ▼            S2906            │
                  ╱──────────╲        NO              │
                 ╱ HOME AGENT ╲                       │
                ╱ INFORMATION  ╲──────────┐           │
                ╲ OPTION ADDED?╱          │           │
                 ╲──────────╱             │           │
                     │ YES                │           │
                     │      S2908         ▼           ▼
              ┌──────────────┐    ┌─────────────────────┐  S2907
              │  HOME AGENT  │    │      BINDING        │
              │  SELECTING   │    │  ACKNOWLEDGEMENT    │
              │   PROCESS    │    │      PROCESS        │
              └──────┬───────┘    └──────────┬──────────┘
                     │     S2909             │
                     ▼                       │
              ┌──────────────┐               │
              │  HOME AGENT  │               │
              │  CHANGING    │               │
              │   PROCESS    │               │
              └──────┬───────┘               │
                     │                       │
                     └───────────────────────┘
```

FIG. 20

EP 1 495 614 B1

FIG. 21

START → RECEIVE BINDING UPDATE (S2801) → RESOURCE SUFFICIENT? (S2802)

YES → UPDATE BINDING CACHE (S2805) → GENERATE BINDING ACKNOWLEDGEMENT DESCRIBING STATUS CODE REPRESENTING REGISTRATION SUCCESS (S2806)

NO → GENERATE BINDING ACKNOWLEDGEMENT DESCRIBING STATUS CODE REPRESENTING RESOURCE DEFICIENCY (S2803) → ADD HOME AGENT INFORMATION TO BINDING ACKNOWLEDGEMENT (S2804)

→ SEND BINDING ACKNOWLEDGEMENT (S2807)

FIG. 22

```
                        ( START )
                            │
                            ▼
              ┌──────────────────────────┐  ─── S2801
              │  RECEIVE BINDING UPDATE   │
              └──────────────────────────┘
                            │
                            ▼                        ─── S3002
                      ╱─────────────╲
                     ╱  CARE-OF ADDRESS ╲        YES
                    ⟨  WITHIN CONTROL RANGE? ⟩─────────────┐
                     ╲               ╱                     │
                      ╲─────────────╱                      │
                            │ NO                           │
                            ▼          ─── S3003           │
        ┌──────────────────────────────────┐              ▼              ─── S2805
        │ GENERATE BINDING ACKNOWLEDGEMENT  │   ┌────────────────────────┐
        │ DESCRIBING STATUS CODE REPRESENTING│   │   UPDATE BINDING CACHE  │
        │ MOVEMENT TO OUTSIDE OF CONTROL    │   └────────────────────────┘
        └──────────────────────────────────┘              │
                            │  ─── S2804                   ▼         ─── S2806
                            ▼                  ┌──────────────────────────────────┐
        ┌──────────────────────────────────┐  │ GENERATE BINDING ACKNOWLEDGEMENT  │
        │   ADD HOME AGENT INFORMATION      │  │ DESCRIBING STATUS CODE REPRESENTING│
        │   TO BINDING ACKNOWLEDGEMENT      │  │     REGISTRATION SUCCESS          │
        └──────────────────────────────────┘  └──────────────────────────────────┘
                            │                          │
                            └────────────┬─────────────┘
                                         ▼
                          ┌──────────────────────────────┐  ─── S2807
                          │  SEND BINDING ACKNOWLEDGEMENT  │
                          └──────────────────────────────┘
```

EP 1 495 614 B1

# FIG. 23

| Prefix |
|--------|
| 1:2:3:0::0/48 |
| 1:2:4:0::0/48 |

3301

:

# FIG. 24

**FIG. 25**

EP 1 495 614 B1

IPv6 Base Header
3900

Mobility Header
3910

Binding Update Message
3920

Initial Hop Limit Option
3930

Binding Information Option
3940

| Ver. | Traffic class | Flow label | |
|---|---|---|---|
| Header Len | | Next Header | Hop Limit |

Source Address

Destination Address

3901

| Payload Protocol | Header Len | MH Type | Reserved |
|---|---|---|---|
| Checksum | | Sequence # | |
| A H L K B | Reserved | Lifetime | |

Mobility Options

3922

3950

3921  3923

| Type | Length | Initial Hop Limit | Reserved |
|---|---|---|---|

| | | Type | Length |
|---|---|---|---|

Home Agent Address, Home Address

46

**FIG. 26**

| IPv6 Base Header 3900 | Ver. | Traffic class | Flow label | |
| Header Len | | Next Header | Hop Limit |
| Source Address | | | |
| Destination Address | | | |

Mobility Header 3910 / Binding Ack Message 4030:
| Payload Protocol | Header Len | MH Type | Reserved | 4031 |
| Checksum | | Status | K C B Reserved | 4033 4032 |
| Sequence # | | Lifetime | |
| Mobility Options | | | |

4050

Home Agent Information Option 4040:
| | | Type | Length |
| Home Agent Information List (IP Address, Resource info, load info and so on) | | | |

Initial Hop Limit Option 3930:
| Type | Length | Initial Hop Limit | Reserved |

EP 1 495 614 B1

FIG. 27

IPv6 Base Header 3900

Mobility Header 3910

Binding Cache Info Request Message 4150

Home Address Option 4160

4100

## FIG. 28

IPv6 Base Header 3900

Mobility Header 3910

Binding Cache Info Reply Message 4260

Binding Cache Information Option 4270

| Ver. | Traffic class | | Flow label | |
|---|---|---|---|---|
| Header Len | | | Next Header | Hop Limit |
| Source Address | | | | |
| Destination Address | | | | |
| Payload Protocol | Header Len | | MH Type | Reserved |
| Checksum | | | Sequence # | |
| Mobility Options | | | | |

| | | Type | Length |
|---|---|---|---|
| Binding Cache Information List (Home Address, Care-of Address, Lifetime and so on) | | | |

4200

# FIG. 29

| Ver. | Traffic class | Flow label | |
|---|---|---|---|
| Header Len | | Next Header | Hop Limit |

Source Address

Destination Address

IPv6 Base Header 3900

| Payload Protocol | Header Len | MH Type | Reserved |
|---|---|---|---|
| Checksum | | Sequence # | |

Mobility Header 3910

Mobility Options

Home Agent Info Req Message 4380

4300

EP 1 495 614 B1

# FIG. 30

IPv6 Base Header 3900

Mobility Header 3910

Home Agent Info Rep Message 4490

Home Agent Information Option 4040

4450

| Ver. | Traffic class | Flow label | |
|---|---|---|---|
| Header Len | | Next Header | Hop Limit |

Source Address

Destination Address

| Payload  Protocol | Header Len | MH Type | Reserved |
|---|---|---|---|
| Checksum | | Sequence # | |

Mobility Options

| | Type | Length |
|---|---|---|

Home Agent Information List
(IP Address, Resource info, load info and so on)

EP 1 495 614 B1

# FIG. 31

| Ver. | Traffic class | Flow label | | |
|------|---------------|------------|--|--|
| Header Len | | | Next Header | Hop Limit |

Source Address

Destination Address

| Type(=133) | Code(=0) | Checksum |
|------------|----------|----------|
| H | Reserved | |

IPv6 Base Header 3900

Router Solicitation Message 4500

4550

4501

FIG. 32

IPv6 Base Header
3900

| Ver. | Traffic class | Flow label | |
|---|---|---|---|
| Header Len | | Next Header | Hop Limit |
| Source Address | | | |
| Destination Address | | | |

Router Advertisement Message
4610

| Type(=134) | Code(=0) | Checksum | |
|---|---|---|---|
| Cur Hop Limit | M | O | Reserved | Router Lifetime |
| Reachable Time | | | |
| Retrnas Timer | | | |

4650

Home Agent Information Option
4040

| | | Type | Length |
|---|---|---|---|
| Home Agent Information List (IP Address, Resource info, load info and so on) | | | |

EP 1 495 614 B1

# FIG.33

RADIO STATION

3301 — HOP NUMBER INFORMATION ACQUIRING MEANS

3302 — PREFERENTIALLY-ACCESSING RADIO STATION SELECTING MEANS

3303 — SIGNAL TRANSFER MEANS

ACCESSIBLE RADIO STATION

ACCESSIBLE RADIO STATION

PREFERENTIALLY-ACCESSING RADIO STATION

BASE STATION

(SLAVE RADIO STATION)

LIST OF DRAWING REFERENCE NUMBERS

10 MOBILE NODE

11,14,20 HOME AGENT

12,15 ACCESS ROUTER

13,16 RESPECTIVE RANGE

17 CORRESPONDENT NODE

18 IP NETWORK

19 HOME AGENT INFORMATION STORING SERVER

1100,1200 COMMUNICATING SECTION

1101,1201,1208,1301,1401 DATA LINK INTERFACE

1102,1202 IP PROCESSING SECTION

1103,1403 UPPER LAYER INTERFACE

1106,1205,1305 HOP NUMBER MEASURING SECTION

1104 HOME AGENT SELECTING SECTION

1108,1207 COMMUNICATION DELAY TIME MEASURING SECTION

1107,1206,1306,1406 HOME AGENT INFORMATION ACQUIRING SECTION

1105,1203,1303,1404 HOME AGENT INFORMATION STORING SECTION

1110,1407 APPLICATION SECTION

1204,1304,1405 HOME AGENT INFORMATION NOTIFYING SECTION

1210,1300,1400 NETWORK INTERFACE

1302,1402 IP PROCESSING SECTION

1307 COMMUNICATION DELAY TIME MEASURING SECTION

2508 HOP-NUMBER/COMMUNICATION-DELAY-TIME MEASURING SECTION

3301 HOP NUMBER INFORMATION ACQUIRING MEANS

3302 PREFERENTIALLY-ACCESSING RADIO STATION SELECTING MEANS

3303 SIGNAL TRANSFER MEANS

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2001237764 A

- EP 1134991 A

**Non-patent literature cited in the description**

- Application-Layer Anycasting. **S. BHATTACHAR-JEE et al.** Infocom '97, 16th Annual Joint Conference of the IEEE Computer and Communications Soc., Kobe, Japan. IEEE Computer Soc, 07 April 1997, 1388-1396

- **C. PERKINS et al.** Mobility Support in IPV6. *Mobicom. Proceedings of the Annual International Conference on Mobile Computing and Networking,* November 1996, 1-11